# EUROPEAN PATENT APPLICATION

(11) **EP 4 495 675 A1**
(43) Date of publication of application: **22.01.2025**
(21) Application number: 23770946.4
(22) Date of filing: 17.01.2023
(51) Int. Cl.: G02B 27/64, G02B 7/28, H02K 33/18, G03B 13/36, G03B 17/12, H04N 23/55

(54) **LENS DRIVING DEVICE, CAMERA DEVICE, AND OPTICAL INSTRUMENT**

(30) Priority: 17.03.2022 KR 20220033654
(71) Applicant: LG INNOTEK CO. LTD, Gangseo-gu Seoul 07796 (KR)
(72) Inventor: LEE, Hyung Joo, Seoul 07796 (KR); PARK, Tae Bong, Seoul 07796 (KR); SEOL, Dong Hyeon, Seoul 07796 (KR)
(74) Representative: M. Zardi & Co S.A.
(86) International application number: PCT/KR2023/000789
(87) International publication number: WO 2023/177066

(57) **Abstract**

The present embodiment relates to a lens driving device comprising: a base; a first holder disposed on the base; a second holder disposed inside the first holder; a first coil and a first magnet which move the second holder in an optical axis direction; a second coil and a second magnet which move the first holder in an x-direction or a y-direction perpendicular to an optical axis; and a first ball disposed between the top plate of the base and the top plate of the first holder, wherein the first ball guides the first holder to move relative to the base in the x-direction and the y-direction perpendicular to the optical axis.

## Description

### [Technical Field]

The present embodiment relates to a lens driving device, a camera device and an optical instrument.

### [Background Art]

A camera device is a device that photographs a picture or video of a subject, and is installed in optical devices such as smartphones, drones, and vehicles.

In camera devices, an auto focus (AF) function that automatically adjusts the focus according to the distance between the camera device and the subject is required. In addition, in order to improve image quality, camera devices are required to have optical image stabilization (OIS) function that corrects image shaking caused by the user's movement.

However, as the diameter of the lens has recently increased as image sensors have become higher resolution, the driving force required for moving the lens to perform the autofocus function or optical image stabilization function is increasing.
(Patent Literature 1) KR 10-0849580 B1

### [Detailed Description of the Invention]

### [Technical Subject]

The present embodiment is intended to provide a lens driving device that provides increased driving force within a limited size.

### [Technical Solution]

A lens driving device according to the present embodiment comprises: a base; a first holder being disposed on the base; a second holder being disposed inside the first holder; a first coil and a first magnet which move the second holder in an optical axis direction; a second coil and a second magnet which move the first holder in an x-direction or a y-direction perpendicular to an optical axis; and a first ball being disposed between the upper plate of the base and the upper plate of the first holder, wherein the first ball may guide the first holder to move in the x-direction and the y-direction perpendicular to the optical axis with respect to the base.

The upper plate of the base comprises a first groove in which the first ball is disposed, and the first groove may have a size larger than the maximum diameter of the first ball.

When the center of the first ball and the center of the first groove are disposed to coincide with each other, a side surface of the first ball may be spaced apart from an inner side surface of the first groove in the x-direction and the y-direction.

The first ball has first to fourth unit balls, and the first unit ball can guide the first holder to move in the x-direction and the y-direction perpendicular to the optical axis with respect to the base.

It comprises a second ball being disposed between the first holder and the second holder, and the second ball can guide the second holder to move in an optical axis direction with respect to the first holder.

The inner side surface of the first holder comprises a second groove that guides the second ball, and an outer side surface of the second holder may comprise a third groove disposed at a position corresponding to the second groove of the first holder.

The inner corner area of the first holder comprises two surfaces that meet each other, and the second groove may be formed on one of the two surfaces.

An inner shape of the first holder may correspond to an outer shape of the second holder.

The lens driving device may comprise a wire supporting the first holder with respect to the base.

The lens driving device may comprise: a first substrate disposed on the base; an elastic member disposed on the first holder; and a wire connecting the first substrate and the elastic member.

The lens driving device comprises a second substrate disposed on the first holder, and the second coil may be disposed on the second substrate.

The second magnet may be disposed on the base.

The second substrate may be disposed between the second coil and the second magnet to be overlapped with the second coil and the second magnet.

The lens driving device may comprise a third substrate disposed on the first holder, and the first coil may be disposed on the third substrate.

The first magnet may be disposed on the second holder.

A lens driving device according to the present embodiment comprises: a base; a first holder disposed on the base; a second holder disposed inside the first holder; a first magnet disposed in the second holder; a second magnet disposed in the base; a first coil and a second coil coupled to the first holder; a first ball disposed between the base and the first holder; and a second ball disposed between the first holder and the second holder, wherein the first ball is disposed between a upper plate of the base and a upper plate of the first holder, and wherein the second ball may be disposed between an inner side surface of the first holder and an outer side surface of the second holder.

A lens driving device according to the present embodiment comprises: a fixed part; a first moving part moving in an x-direction or a y-direction with respect to the fixed part; a second moving part moving in a z-direction with respect to the first moving part; a first ball disposed between the fixed part and the first moving part; a second ball disposed between the first moving part and the second moving part; and a wire coupled to the fixed part and the first moving part, wherein the first ball guides the first moving part to move in the x-direction and the y-direction and may be disposed outside an area of the first moving part connected to the wire.

Two of the wires may be coupled to at least one corner of the first moving part.

A camera device according to the present embodiment may comprises: a printed circuit board; an image sensor disposed on the printed circuit board; the lens driving device disposed on the printed circuit board; and a lens coupled to the second holder of the lens driving device.

An optical instrument according to the present embodiment may comprise: a main body; the camera device disposed on the main body; and a display disposed on the main body and outputting images photographed by the camera device.

### [Advantageous Effects]

Through the present embodiment, compared to a structure in which a ball for guiding driving in an x-axis direction and a ball for guiding driving in a y-axis direction are used separately, the driving force can be increased by about 1.5 times when a camera device is at the same height.

In addition, the performance of the autofocus function and optical image stabilization function can be maintained regardless of the direction the camera device is facing. In other words, the aspect of maintaining performance depending on the difference in posture of a camera device can be improved.

In addition, crosstalk between the driving force in an x-axis direction and the driving force in a y-axis direction, which may occur as a result of using a ball that guides both an x-axis direction and a y-axis direction, can be resolved by a wire. In more detail, the phenomenon of moving in a y-axis direction due to the driving force in an x-axis direction or moving in an x-axis direction due to the driving force in a y-axis can be prevented.

In addition, by applying insert injection molding to the ball rolling surface of the base and OIS holder, ball dent phenomenon that occurs after impact, such as in impact reliability tests, can be minimized. In other words, changes in the shape of the ball, such as distortion of the ball, can be minimized. Conversely, the phenomenon of one or more of the base and the OIS holder being dented or recessed by the ball can be minimized.

### [Brief Description of Drawings]

FIG. 1 is a perspective view of a lens driving device according to the present embodiment.
FIG. 2 is a cross-sectional view taken along line A-A of FIG. 1.
FIG. 3 is a cross-sectional view taken along line B-B of FIG. 1.
FIG. 4 is a cross-sectional view taken along line C-C of FIG. 1.
FIG. 5 is a cross-sectional view and a partially enlarged view illustrating a lens driving device according to the present embodiment cut in a direction perpendicular to the optical axis.
FIG. 6 is an exploded perspective view of a lens driving device according to the present embodiment.
FIG. 7 is an exploded perspective view of a lens driving device according to the present embodiment viewed from a different direction than FIG. 6.
FIG. 8 is a perspective view of a lens driving device according to the present embodiment with a cover member omitted.
FIG. 9 is a side see-through view illustrating a partial configuration of a lens driving device in the state of FIG. 8.
FIG. 10 is a side see-through view illustrating an additional configuration by seeing through compared to FIG. 9.
FIG. 11 is a cross-sectional view illustrating a cross-section in which an OIS guide ball is cut in a lens driving device according to the present embodiment.
FIG. 12 is a perspective view of a lens driving device according to the present embodiment with a cover member and base omitted.
FIG. 13 is a side see-through view illustrating a partial configuration of a lens driving device in the state of FIG. 12 by seeing through.
FIG. 14 is a side see-through view illustrating an additional configuration compared to FIG. 13 by seeing through.
FIG. 15 is a cross-sectional view illustrating a cross-section, in which an OIS guide ball is cut, in a lens driving device according to the present embodiment.
FIG. 16 is a cross-sectional perspective view and partially enlarged view of a portion of a lens driving device according to the present embodiment.
FIG. 17 is a cross-sectional perspective view illustrating a state in which the AF holder of a lens driving device according to the present embodiment moves upward and comes into contact with a upper plate of a cover member.
FIG. 18 is a perspective view of a lens driving device according to the present embodiment with a cover member and an OIS holder omitted.
FIG. 19 is a cross-sectional perspective view illustrating a cross-section cut in a way that some components are omitted in a lens driving device according to the present embodiment so that an OIS guide ball can be cut.
FIG. 20 is a side view with some components omitted to show the arrangement of an AF guide ball and an OIS guide ball in a lens driving device according to the present embodiment.
FIG. 21 is a perspective view of a lens driving device in the state of FIG. 20.
FIGS. 22A and 22B are perspective views of some configurations of a lens driving device according to the present embodiment.
FIG. 23 is a perspective view illustrating a coupled state of an elastic member, a wire, and a substrate of a lens driving device according to the present embodiment.
FIG. 24 is a perspective view illustrating a partial configuration of a lens driving device according to the present embodiment.
FIG. 25 is a perspective view illustrating an AF moving part and related configuration of a lens driving device according to the present embodiment.
FIG. 26 is a bottom view and partially enlarged view of a lens driving device according to the present embodiment.
FIGS. 27 and 28 are diagrams for explaining AF driving of a lens driving device according to the present embodiment.
FIGS. 29 to 31 are diagrams for explaining OIS driving of a lens driving device according to the present embodiment.
FIG. 32 is an exploded perspective view of a camera device according to the present embodiment.
FIG. 33 is a perspective view of an optical instrument according to the present embodiment.
FIG. 34 is a perspective view of an optical device according to the present embodiment seen from a direction different from that of FIG. 33.
FIG. 35 is a perspective view of an optical device according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction with respect to one component may be comprised.

The 'optical axis direction' used hereinafter is defined as the optical axis direction of the lens and/or image sensor being coupled to the lens driving device.

The 'vertical direction' used hereinafter may be a direction parallel to an optical axis direction. The vertical direction may correspond to a 'z-axis direction'. The 'horizontal direction' used hereinafter may be a direction perpendicular to the vertical direction. That is, the horizontal direction may be a direction perpendicular to the optical axis. Therefore, the horizontal direction may comprise an 'x-axis direction' and a 'y-axis direction'.

The 'auto focus (AF) function' used hereinafter is defined as a function that automatically focuses on the subject by adjusting the distance from the image sensor by moving the lens in an optical axis direction according to the distance so as to obtain a clear image of the subject on the image sensor. In addition, 'closed-loop auto focus (CLAF) control' is defined as real-time feedback control of the position of the lens by detecting the distance between the image sensor and the lens so as to enhance the accuracy in focus control.

The 'optical image stabilization (OIS) function' used hereinafter is defined as a function that moves or tilts the lens in a direction perpendicular to an optical axis so as to offset vibration (movement) generated in the image sensor by external force.

Hereinafter, any one of an 'AF holder' and an 'OIS holder' may be referred to as a 'first holder' and the other may be referred to as a 'second holder'. In addition, any one among an 'AF substrate', 'OIS substrate', and 'FPCB' is referred to as a 'first substrate', the other one is referred to as a 'second board', and the remaining one can be referred to as a 'third board'. In addition, any one of an 'AF coil' and an 'OIS coil' may be referred to as a 'first coil' and the other may be referred to as a 'second coil'. In addition, any one of an 'AF magnet' and an 'OIS magnet' can be referred to as a 'first magnet' and the other can be referred to as a 'second magnet'. In addition, any one of an 'AF guide ball' and an 'OIS guide ball' is referred to as a 'first ball', and the other one can be referred to as a 'second ball'. In addition, any one of an 'OIS-x coil' and an 'OIS-y coil' is referred to as a 'first unit coil' and the other may be referred to as a 'second unit coil'. In addition, any one of an 'OIS-x magnet' and an 'OIS-y magnet' is referred to as a 'first unit magnet' and the other one may be referred to as a 'second unit magnet'. In addition, any one among an 'AF coil', an 'OIS-x coil', and an 'OIS-y coil' is referred to as a 'first coil', the other one is referred to as a 'second coil', and the remaining one may be referred to as a 'third coil'. In addition, any one among an 'AF magnet', an 'OIS-x magnet', and an 'OIS-y magnet' is referred to as a 'first magnet', the other one is referred to as a 'second magnet', and the remaining one may be referred to as a 'third magnet'.

Hereinafter, the configuration of the lens driving device according to the present embodiment will be described with reference to the drawings.

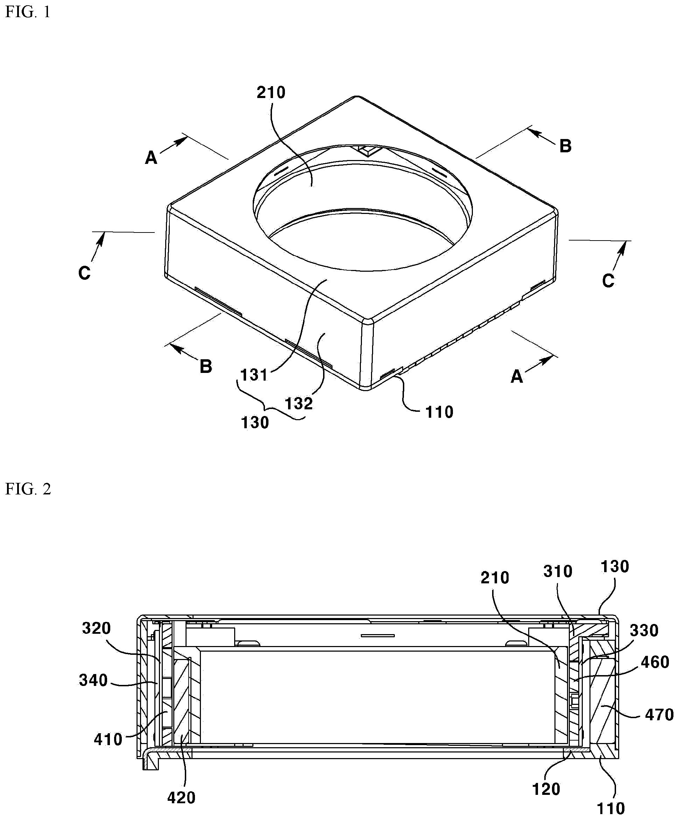

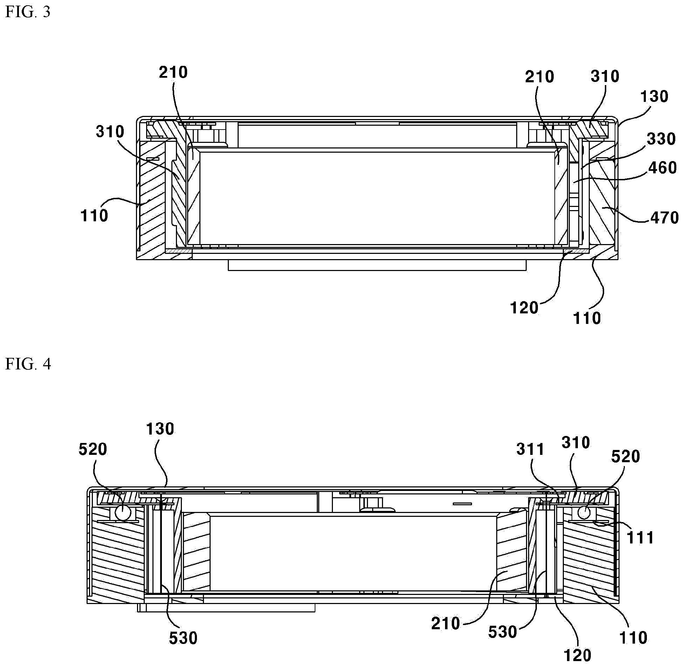

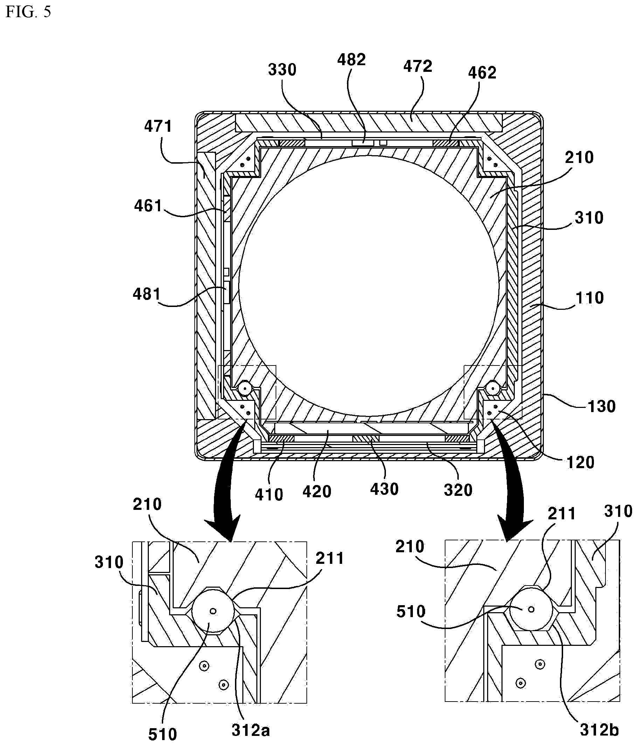

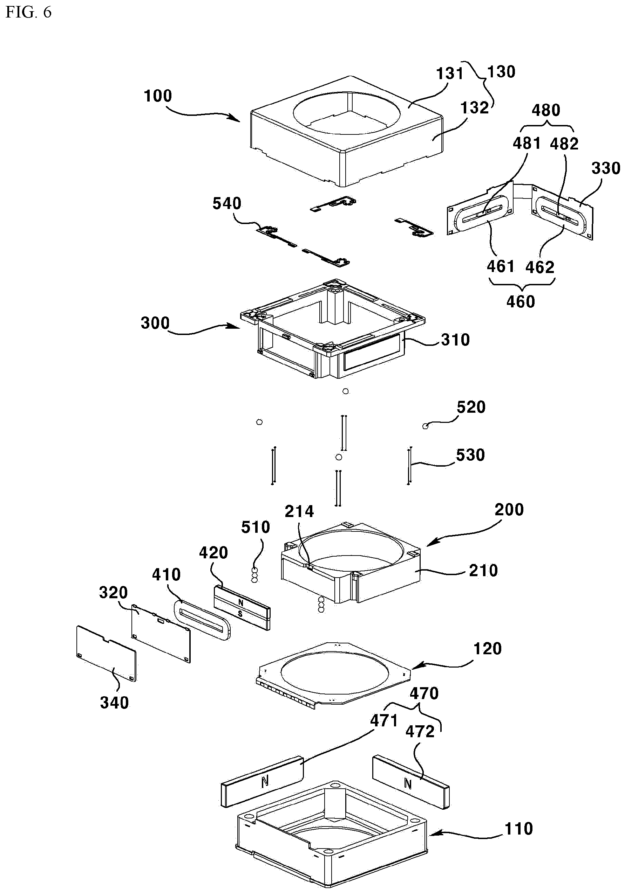

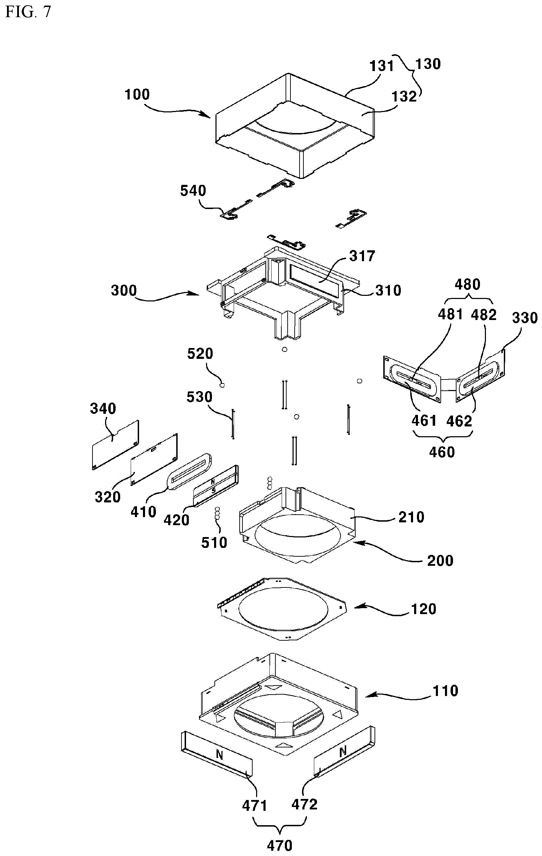

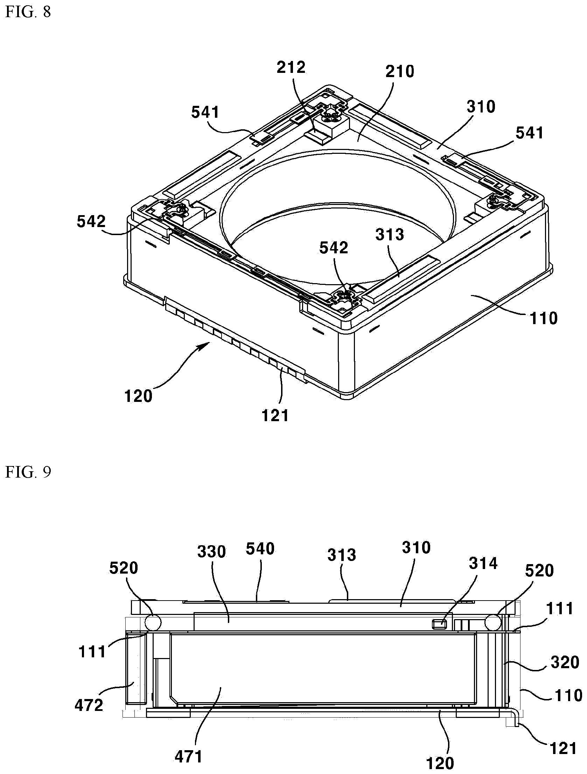

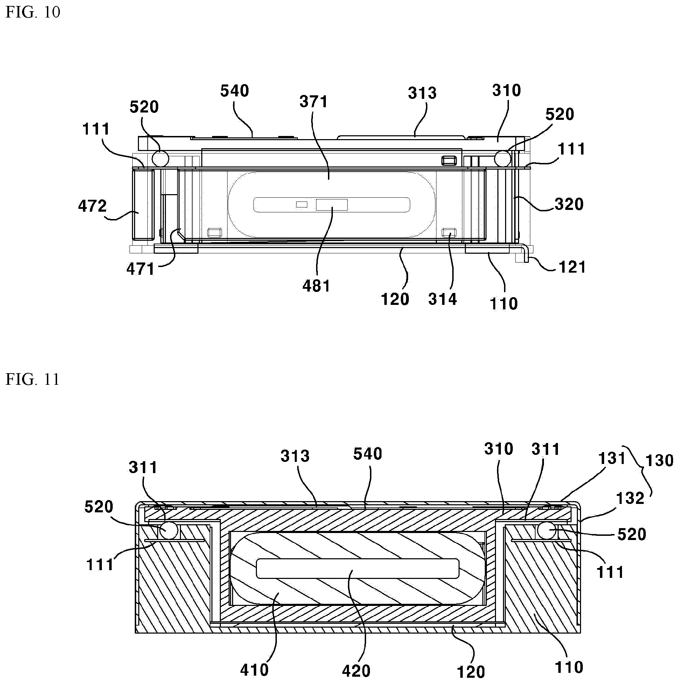

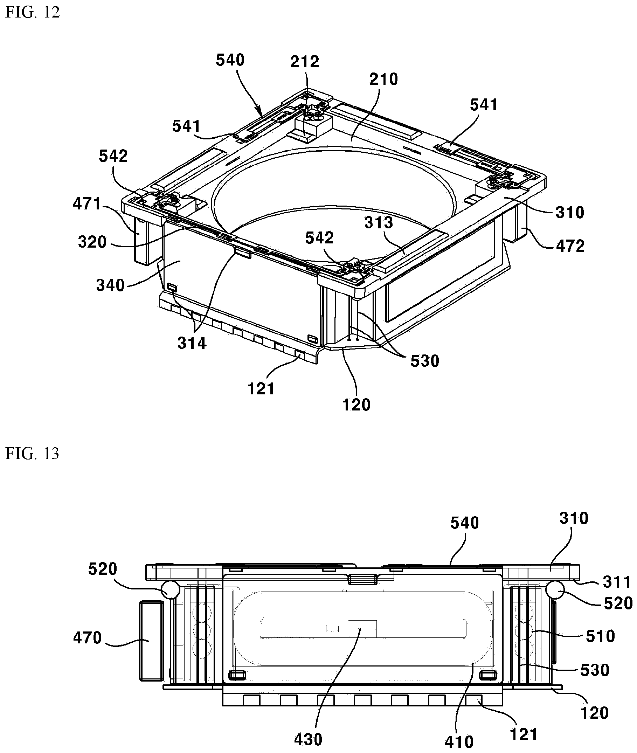

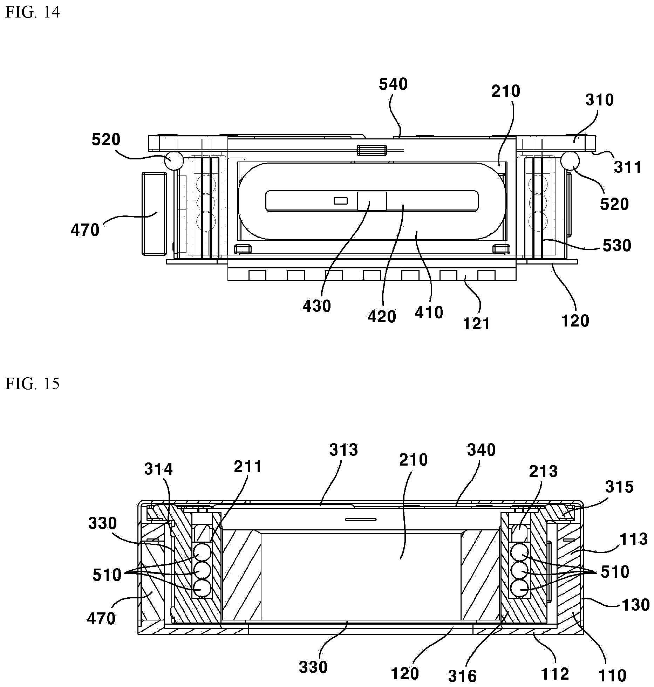

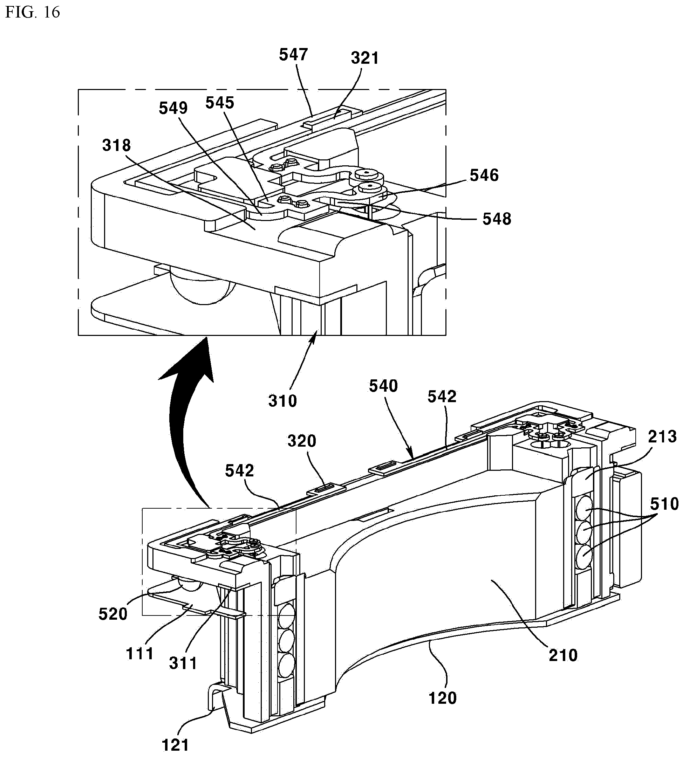

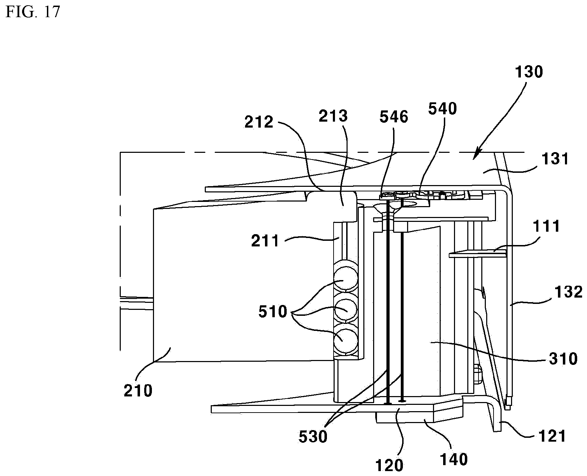

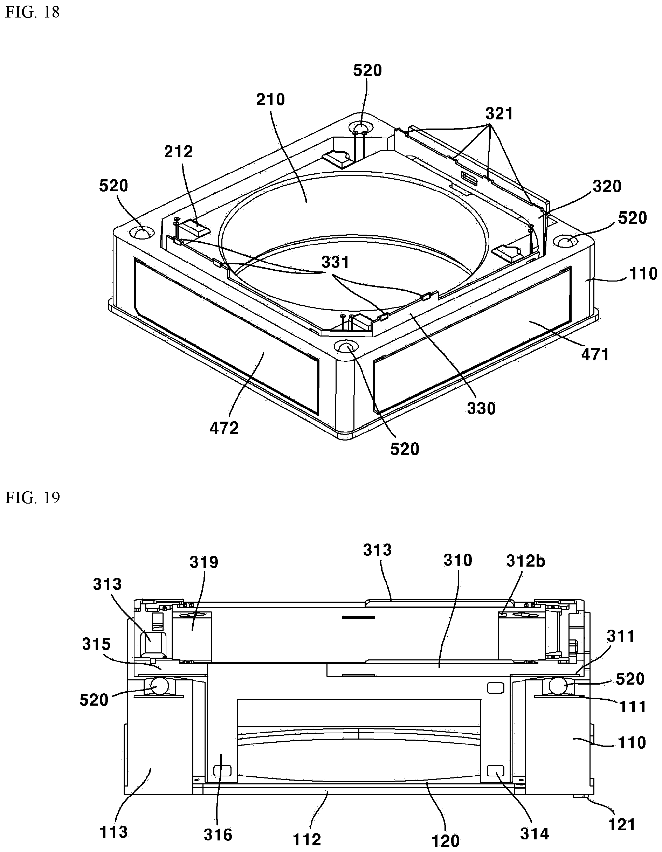

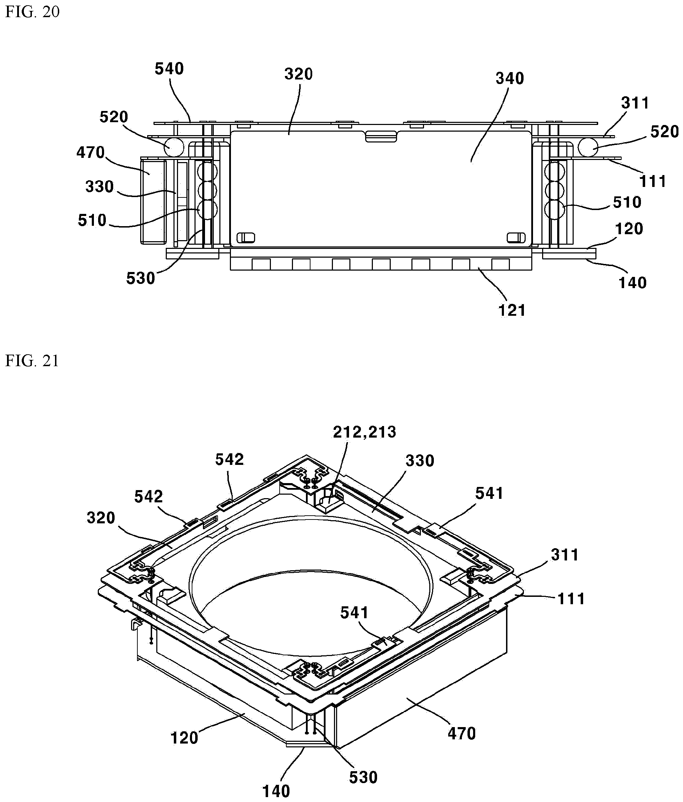

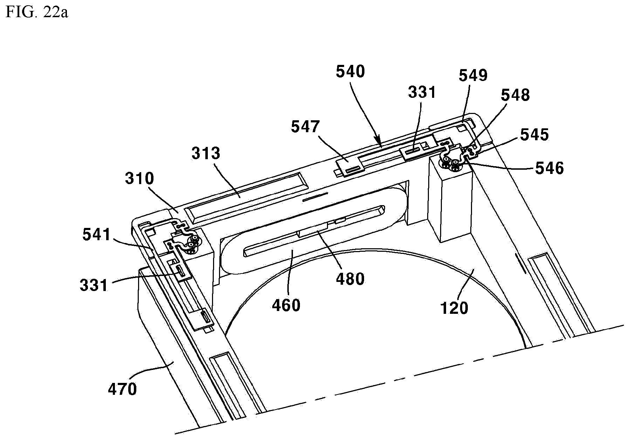

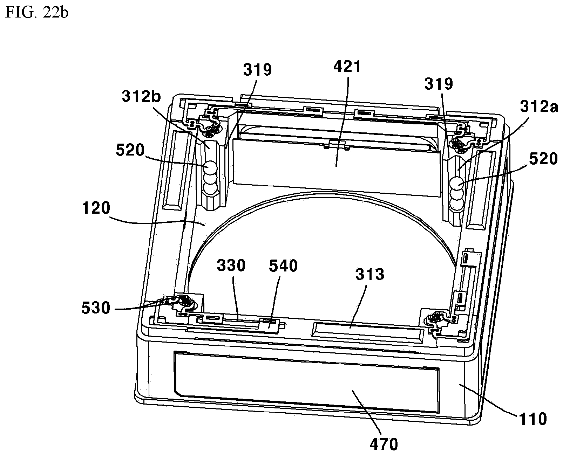

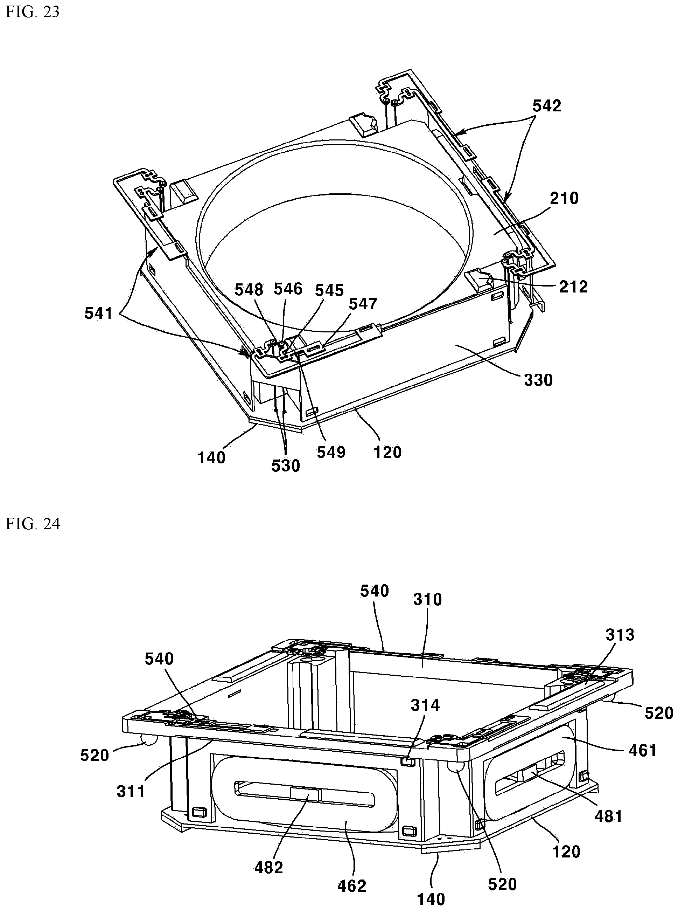

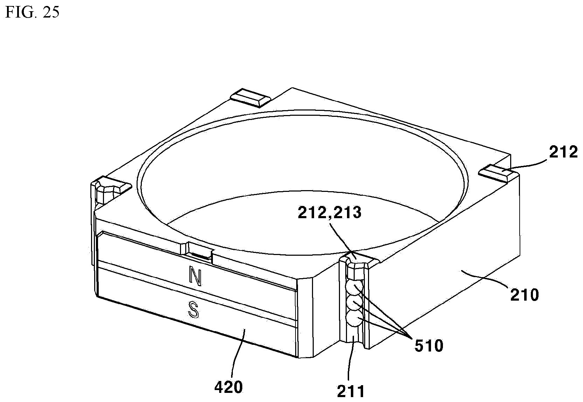

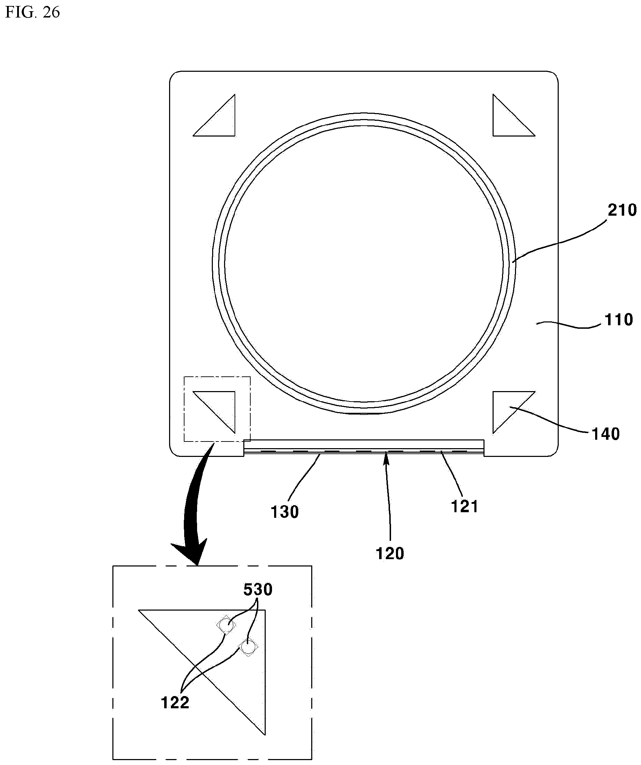

FIG. 1 is a perspective view of a lens driving device according to the present embodiment; FIG. 2 is a cross-sectional view taken along line A-A of FIG. 1; FIG. 3 is a cross-sectional view taken along line B-B of FIG. 1; FIG. 4 is a cross-sectional view taken along line C-C of FIG. 1; FIG. 5 is a cross-sectional view and a partially enlarged view illustrating a lens driving device according to the present embodiment cut in a direction perpendicular to the optical axis; FIG. 6 is an exploded perspective view of a lens driving device according to the present embodiment; FIG. 7 is an exploded perspective view of a lens driving device according to the present embodiment viewed from a different direction than FIG. 6; FIG. 8 is a perspective view of a lens driving device according to the present embodiment with a cover member omitted; FIG. 9 is a side see-through view illustrating a partial configuration of a lens driving device in the state of FIG. 8; FIG. 10 is a side see-through view illustrating an additional configuration by seeing through compared to FIG. 9; FIG. 11 is a cross-sectional view illustrating a cross-section in which an OIS guide ball is cut in a lens driving device according to the present embodiment; FIG. 12 is a perspective view of a lens driving device according to the present embodiment with a cover member and base omitted; FIG. 13 is a side see-through view illustrating a partial configuration of a lens driving device in the state of FIG. 12 by seeing through; FIG. 14 is a side see-through view illustrating an additional configuration compared to FIG. 13 by seeing through; FIG. 15 is a cross-sectional view illustrating a cross-section, in which an OIS guide ball is cut, in a lens driving device according to the present embodiment; FIG. 16 is a cross-sectional perspective view and partially enlarged view of a portion of a lens driving device according to the present embodiment; FIG. 17 is a cross-sectional perspective view illustrating a state in which the AF holder of a lens driving device according to the present embodiment moves upward and comes into contact with a upper plate of a cover member; FIG. 18 is a perspective view of a lens driving device according to the present embodiment with a cover member and an OIS holder omitted; FIG. 19 is a cross-sectional perspective view illustrating a cross-section cut in a way that some components are omitted in a lens driving device according to the present embodiment so that an OIS guide ball can be cut; FIG. 20 is a side view with some components omitted to show the arrangement of an AF guide ball and an OIS guide ball in a lens driving device according to the present embodiment; FIG. 21 is a perspective view of a lens driving device in the state of FIG. 20; FIGS. 22A and 22B are perspective views of some configurations of a lens driving device according to the present embodiment; FIG. 23 is a perspective view illustrating a coupled state of an elastic member, a wire, and a substrate of a lens driving device according to the present embodiment; FIG. 24 is a perspective view illustrating a partial configuration of a lens driving device according to the present embodiment; FIG. 25 is a perspective view illustrating an AF moving part and related configuration of a lens driving device according to the present embodiment; and FIG. 26 is a bottom view and partially enlarged view of a lens driving device according to the present embodiment.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed part **100.** The fixed part **100** may be a stator. The fixed part **100** may be a relatively fixed part when the moving part moves.

The lens driving device **10** may comprise a base **110.** The fixed part **100** may comprise a base **110.** The base **110** may be disposed outside the AF holder **210.** The base **110** may be disposed below the AF holder **210.** The base **110** may be disposed outside the OIS holder **310.** The base **110** may be disposed below the OIS holder **310.** The base **110** may be coupled with cover member **130.** The base **110** may form a lower surface of the lens driving device **10.**

The base **110** may comprise a bottom plate unit **112.** The FPCB **120** may be disposed in the bottom plate unit **112.** An OIS holder **310** may be disposed on the bottom plate unit **112.** The AF holder **210** may be disposed on the bottom plate unit **112.**

The base **110** may comprise a side plate unit **113.** The side plate unit **113** may be extended from the bottom plate unit **112.** The side plate unit **113** may be extended upward from the bottom plate unit **112.** The side plate unit **113** may be protruded upward from the bottom plate unit **112.** The side plate unit **113** may be disposed to surround the side surface of the OIS holder **310.** The side plate unit **113** may comprise a groove. An OIS guide ball **520** may be disposed in the groove of the side plate unit **113.** The side plate unit **113** may comprise a hole. An OIS magnet **470** may be disposed in the hole of the side plate unit **113.** The side plate unit **113** of the base **110** may comprise a pillar.

The base **110** may comprise a upper plate. The upper plate of the base **110** may be the upper end portion of the side plate unit **113.**

The lens driving device **10** may comprise a metal plate **111.** The fixed part **100** may comprise a metal plate **111.** The metal plate **111** may be a metal member. The metal plate **111** may be a dent prevention member. The base **110** may comprise a metal plate **111.** The metal plate **111** may be formed in the base **110** by insert injection. The metal plate **111** may be understood as a component of the base **110.** Or, the metal plate **111** may be understood as a separate component from the base **110.** The metal plate **111** may be disposed in the base **110.** The metal plate **111** may be fixed to the base **110.** The metal plate **111** may be coupled to the base **110.** The metal plate **111** may be formed of a different material from the base **110.** The metal plate **111** may be made of metal. The base **110** may be formed by injection molding.

The lens driving device **10** may comprise an FPCB **120.** The fixed part **100** may comprise an FPCB **120.** The FPCB **120** may be a substrate. The FPCB **120** may be a flexible printed circuit board. The FPCB **120** may be disposed in base 110. The FPCB **120** may be disposed in the bottom plate unit **111 of** the base **110.** The FPCB **120** may be coupled with the printed circuit board **50** of the camera device **10A.** The FPCB **120** may be electrically connected to the printed circuit board **50** of the camera device **10A.** The FPCB **120** may be connected to the printed circuit board **50** of the camera device **10A** by a solder. The FPCB **120** may receive power from the printed circuit board **50** of the camera device **10A.** The FPCB **120** may receive current from the printed circuit board **50** of the camera device **10A.**

The FPCB **120** may comprise a terminal unit **121.** The FPCB **120** may comprise a body unit. The body unit may be disposed in the bottom plate unit **112** of the base **110.** The body unit may be disposed on an upper surface of the bottom plate unit **112** of the base **110.** The terminal unit **121** may be extended from the body unit. The terminal unit **121** may be bent from the body unit. The terminal unit **121** is formed integrally with the body unit and can be bent. The terminal unit **121** may be extended downward from one edge of the body unit. The terminal unit **121** may be disposed on a side surface of the base **110.** The terminal unit **121** may be disposed in a groove or recess being formed on a side surface of the base **110.** The base **110** corresponds to the terminal unit **121** of the FPCB **120** so that the terminal unit **121** is disposed, or it may comprise a groove or recess being formed on a side surface of the base **110** with a width greater than that of the terminal unit **121.**

The terminal unit **121** of the FPCB **120** may comprise a plurality of terminals. The terminal unit **121** may comprise 8 terminals. The four terminals of the terminal unit **121** may be electrically connected to the AF driver IC **430.** The other four terminals of the terminal unit **121** may be electrically connected to the OIS-x driver IC **481** and the OIS-y driver IC **482.** At this time, the slave address can be changed to integrate the OIS-x driver IC **481** and OIS-y driver IC **482** which respectively requires four terminals. Meanwhile, the terminal unit **121** may comprise 7 terminals. In this case, the ground terminal for the AF driver IC **430** and the ground terminal for the OIS driver IC **480** can be used together. In the present embodiment, both AF driving and feedback control and OIS driving and feedback control can be performed through the seven terminals.

The FPCB **120** may comprise terminals **122.** The terminal **122** may be formed on a lower surface of the body unit of the FPCB **120.** The lower end portion of the wire **540** may be coupled to the terminal **122** by a solder. An adhesive member **140** may be disposed in the terminal **122.**

The lens driving device **10** may comprise a cover member **130.** The fixed part 100 may comprise a cover member **130.** The cover member **130** may be disposed in the base **110.** The cover member **130** may be disposed on the base **110.** The cover member **130** may be fixed to the base **110.** The cover member **130** may be coupled to the base **110.** The cover member **130** can accommodate the OIS holder **310** therein. The cover member **130** can accommodate the AF holder **210** therein. The cover member **130** may be a shield member. The cover member **130** may be a shield can. The cover member **130** can block electromagnetic interference (EMI). At this time, the cover member **130** may be an EMI shield can.

The cover member **130** may comprise a upper plate **131.** The cover member **130** may comprise a side plate **132.** The upper plate **131** may be disposed in a direction perpendicular to the optical axis. The side plate **132** may be disposed in a direction parallel to the optical axis. The side plate **132** may be extended from the upper plate **131.** The side plate **132** may be extended downward from an edge of the upper plate **131.** The side plate **132** may be formed integrally with the upper plate **131.** The side plate **132** may be bent from the upper plate **131.**

The side plate **132** may comprise a plurality of side plates. The side plate **132** may comprise four side plates. The side plate **132** may comprise first to fourth side plates. The side plate **132** may comprise: a first side plate and a second side plate being disposed on opposite sides of each other; and a third side plate and a fourth side plate being disposed on opposite sides of each other. The third side plate and the fourth side plate can connect the first side plate and the second side plate.

The lens driving device **10** may comprise an adhesive member **140.** The fixed part **100** may comprise an adhesive member **140.** The adhesive member **140** may be an adhesive. The adhesive member **140** may be a sealing member. The adhesive member **140** may have viscosity. The adhesive member **140** may comprise epoxy. The adhesive member **140** may be disposed at a lower end portion of the wire **530.** The base **110** may comprise a hole to prevent interference with a conductive member connecting the wire **530** and the FPCB **120.** The adhesive member **140** may be disposed in the hole of the base **110.** The adhesive member **140** may seal the hole of the base **110.** The hole of the base **110** may have a triangular shape. The base **110** may comprise a triangular-shaped hole. Solder connecting the lower end of the wire **530** and the FPCB **120** may be disposed in a triangular hole of the base 110. The triangular hole of the base **110** may be sealed by the adhesive member **140.**

The lens driving device **10** may comprise a moving part. The moving part may be a mover. The moving part may be a movable part. The moving part may be a mover. The moving part can move with respect to the fixed part **100.** The moving part may comprise the AF moving part **200.** The moving part may comprise the **OIS** moving part **300.**

The lens driving device **10** may comprise an AF moving part **200.** The AF moving part **200** may be an AF mover. The AF moving part **200** may be an AF movable part. The AF moving part **200** may be an AF mover. The AF moving part **200** can move in a z-direction with respect to the OIS moving part **300.** The z-direction may be the z-axis direction. The AF moving part **200** may move in an optical axis direction with respect to the fixed part **100** and/or the OIS moving part **300.** The AF moving part **200,** together with the OIS moving part **300,** can move in a direction perpendicular to the optical axis with respect to the fixed part **100.**

In the present embodiment, the AF moving part **200** may be disposed inside the OIS moving part **300.** As a comparative example, the OIS moving part **300** may be disposed inside the AF moving part **200.** In the present embodiment, compared to the comparative example, when driving AF, the OIS moving part **300** does not move and only the AF moving part **200** moves, so current consumption can be reduced compared to the comparative example in which the OIS moving part **300** and the AF moving part **200** are moved together.

The lens driving device **10** may comprise an AF holder **210.** The AF moving part **200** may comprise an AF holder **210.** The AF holder **210** may be disposed inside the OIS holder **310.** The AF holder **210** may be disposed on the base **110.** The AF holder **210** may be disposed inside the base **110.** The AF holder **210** may be disposed inside the cover member **130.** The AF holder **210** may be disposed to be movable in an optical axis direction. The AF holder **210** may be disposed to be movable in a direction perpendicular to the optical axis. The AF holder **210** can move in an optical axis direction with respect to the OIS holder **310.** The AF holder **210,** together with the OIS holder **310,** can move in a direction perpendicular to the optical axis with respect to the base **110.**

The AF holder **210** may comprise a groove **211.** The groove **211** may be an AF guide ball accommodating groove. The groove **211** may be a guide rail. The groove **211** may be formed on a side surface of the AF holder **210.** The groove **211** may be formed on an outer side surface of the AF holder **210.** An AF guide ball **510** may be disposed in the groove **211.** The groove **211** may be in contact with at least a portion of the AF guide ball **510.** The groove **211** may be in contact with the AF guide ball 510 at three points. Or, the groove **211** may be in contact with the AF guide ball **510** at two points. The groove **211** may be extended in an optical axis direction. The groove **211** may be disposed in an optical axis direction. The groove **211** can be opened in one direction. The groove **211** may be open in one direction perpendicular to the optical axis. The groove **211** may be open in a downward direction. The groove **211** may be open in an x-axis direction and a downward direction.

The AF holder **210** may comprise an upper stopper **212.** The upper stopper **212** may be formed on an upper surface of the AF holder **210.** The upper stopper **212** may restrict movement of the AF holder **210** in an optical axis direction. The upper stopper **212** may be in contact with the upper plate **131** of the cover member **130.** The upper stopper **212** may be in contact with the upper plate **131** of the cover member **130** when the AF holder **210** moves upward. The upper plate **131** of the cover member **130** may be overlapped with the AF holder **210** in an optical axis direction. The upper plate **131** of the cover member **130** may be overlapped with the upper stopper **212** of the AF holder **210** in an optical axis direction.

The AF holder **210** may comprise a cover portion **213.** The cover portion 213 may be disposed above the AF guide ball **510.** The cover portion **213** may be overlapped with the AF guide ball **510** in an optical axis direction. At least a portion of the cover portion **213** may be disposed in a first groove **312a** and a second groove **312b** of the OIS holder **310.** Through this, the cover portion **213** can prevent the AF guide ball **510** from being separated. The cover portion **213** may be disposed to cover the AF guide ball **510.** The cover portion **213** may be formed together with the upper stopper **212.** That is, the cover portion **213** may be formed to also function as an upper stopper **212.**

The AF holder **210** may comprise a groove **214.** The groove **214** may be formed on an outer side surface of the AF holder **210.** The groove **214** may be disposed on the AF magnet **420.** Adhesive may be injected into the AF magnet **420** through the groove **214.**

The lens driving device **10** may comprise an OIS moving part **300.** The OIS moving part **300** may be an OIS operator. The OIS moving part **300** may be an OIS movable part. The OIS moving part **300** may be an OIS mover. The OIS moving part **300** can move in an x-direction or a y-direction with respect to the fixed part **100.** The x-direction may be an x-axis direction and the y-direction may be a y-axis direction. The OIS moving part **300** can move in any one or more of an x-direction and a y-direction with respect to the fixed part **100.** The OIS moving part **300** can move in a direction perpendicular to the optical axis with respect to the fixed part **100.** At this time, the AF moving part **200** may move together with the OIS moving part **300.**

The lens driving device **10** may comprise an OIS holder **310.** The OIS moving part **300** may comprise an OIS holder **310.** The OIS holder **310** may be disposed on the base **110.** The OIS holder **310** may be disposed in the base **110.** The OIS holder **310** may be disposed above the base **110.** The OIS holder **310** may be disposed inside the base **110.** The OIS holder **310** may be disposed inside the cover member **130.** The OIS holder **310** may be disposed outside the AF holder **210.** The OIS holder **310** may be disposed between the AF holder **210** and the base **110.** The OIS holder **310** may be disposed between the AF holder **210** and the cover member **130.** The OIS holder **310** may be disposed to be movable in a direction perpendicular to the optical axis. A magnet may not be disposed in the OIS holder **310.** The driving magnet may be spaced apart from the OIS holder **310.**

The OIS holder **310** may comprise grooves **312a** and **312b.** The grooves **312a** and **312b** may be AF guide ball receiving grooves. The grooves **312a** and **312b** may be guide rails. The grooves **312a** and **312b** may be formed on a side surface of the OIS holder **310.** The grooves **312a** and **312b** of the OIS holder **310** may be disposed at positions corresponding to the grooves **211** of the AF holder **210.** The grooves **312a** and **312b** may be formed on an inner side surface of the OIS holder **310.** AF guide balls **510** may be disposed in the grooves **312a** and **312b.** The grooves **312a** and **312b** may be in contact with at least a portion of the AF guide ball **510.** The grooves **312a** and **312b** may be in contact with the AF guide ball **510** at three points. Or, the grooves **312a** and **312b** may be in contact with the AF guide ball **510** at two points. The grooves **312a** and **312b** may be extended in an optical axis direction. The grooves **312a** and **312b** may be disposed in an optical axis direction. The grooves **312a** and **312b** can be open in one direction. The grooves **312a** and **312b** may be open in one direction perpendicular to the optical axis. The grooves **312a** and **312b** may be opened upward. The grooves **312a** and **312b** may be disposed more inward than the side surface of the OIS holder **310** to avoid interference with the wire **530.**

The OIS holder **310** may comprise two surfaces that meet each other at an inner corner area. The grooves **312a** and **312b** may be formed on one of two surfaces. The inner shape of the OIS holder **310** may correspond to the outer shape of the AF holder **210.**

The OIS holder 310 may comprise a first groove **312a.** The first groove **312a** may be a three-point contact groove. The first groove **312a** may be in contact with the AF guide ball **510** at three points.

The OIS holder **310** may comprise a second groove **312b.** The second groove **312b** may be a two-point contact groove. The second groove **312b** may be in contact with the AF guide ball **510** at two points. The second groove **312b** may be formed in a different size from the first groove **312a.** In a direction perpendicular to the optical axis, the width of the second groove **312b** may be larger than the width of the first groove **312a.**

The OIS holder 310 may comprise an upper stopper **313.** The upper stopper **313** may be formed on an upper surface of the OIS holder **310.** The upper stopper **313** may restrict movement of the OIS holder **310** in an optical axis direction. The upper stopper **313** may be in contact with the upper plate **131** of the cover member **130.** The upper stopper **313** may be in contact with the upper plate **131** of the cover member **130** when the OIS holder **310** moves upward. The upper plate **131** of the cover member **130** may be overlapped with the upper stopper **313** of the OIS holder **310** in an optical axis direction.

The upper stopper **313** may comprise multiple upper stoppers. The upper stopper **313** may comprise three upper stoppers. The upper stopper **313** may be disposed on an upper surface of each of the three side plate units of the OIS holder **310.** Or, as a modified embodiment, the upper stopper **313** may be formed in two or four pieces. Or, a plurality of side plate units may be formed in each side plate unit of the OIS holder **310.**

The upper stopper **313** can maintain a state of being spaced apart from the upper plate **131** of the cover member **130** under normal driving conditions. However, when an impact occurs in a lens driving device, the upper stopper **313** may come into contact with the upper plate **131** of the cover member **130.** The distance between the upper stopper **313** and the upper plate **131** of the cover member **130** may be 50 *µ*m. The distance between the upper stopper **313** and the upper plate **131** of the cover member **130** may be 45 to 55 *µ*m. The distance between the upper stopper **313** and the upper plate **131** of the cover member **130** may be 40 to 60 *µ*m. The distance between the upper stopper **313** and the upper plate **131** of the cover member **130** may be less than 50% of the diameter of the OIS guide ball **520.**

The upper stopper **313** may be protruded more upward than the elastic member **540.** The upper stopper **313** may be protruded more upward than the upper end of the wire **530.** Even if the OIS holder **310** moves upward, the upper stopper **313** may be in contact with the upper plate **131** of the cover member **130** to prevent the elastic member **540** and wire **530** from being in contact with the upper plate **131** of the cover member **130.** Through this, a short circuit occurring when the elastic member **540** or the wire **530** comes into contact with the upper plate **131** of the cover member **130** can be prevented.

The OIS holder **310** may comprise a lateral stopper **314.** The lateral stopper **314** may be formed on a side surface of the OIS holder **310.** The lateral stopper **314** may be formed on the outer side surface of the OIS holder **310.** The lateral stopper **314** may be formed to be protruded outward from a side surface of the OIS holder **310.** The lateral stopper **314** may penetrate the AF substrate **320** or the OIS substrate **330.** The AF substrate **320** and/or the OIS substrate **330** may comprise a hole into which the lateral stopper **314** is inserted. The lateral stopper **314** may restrict movement of the OIS holder **310** in a lateral direction. The lateral stopper **314** may be in contact with the fixed part **100** or the OIS magnet **470** when the OIS holder **310** moves in a direction perpendicular to the optical axis. The lateral stopper **314** may comprise a first lateral stopper in contact with the base **110** and a second lateral stopper in contact with the OIS magnet **470.** At this time, the first lateral stopper may be protruded more than the second lateral stopper. Through this, after the first lateral stopper hits the base **110,** the second lateral stopper is in contact with the OIS magnet **470,** thereby minimizing the impact being applied to the OIS magnet **470.**

The OIS holder **310** may comprise a upper plate unit **315.** The upper plate unit **315** may be disposed on the side plate unit **113** of the base **110.** The upper plate unit **315** may be disposed above the side plate unit **113** of the base **110.** An OIS guide ball **520** may be disposed in the upper plate unit **315.**

The OIS holder **310** may comprise a side plate unit **316.** The side plate unit **316** may be extended downward from the upper plate unit **315.** The AF substrate **320** may be disposed in the side plate unit **316.** An OIS substrate **330** may be disposed in the side plate unit **316.** A hole or groove in which the AF coil **410** is disposed may be formed in the side plate unit **316.** A hole or groove in which the OIS coil **460** is disposed may be formed in the side plate unit **316.**

The OIS holder **310** may comprise a protruded portion **317.** The protruded portion **317** may be formed in the side plate unit **316** of the OIS holder **310.** The protruded portion **317** may be protruded outward. Through this, the protruded portion **317** can function as a lateral stopper. The protruded portion **317** may be provided to compensate for the weight of the OIS substrate **330** and the OIS coil **460** being disposed on opposite sides. Accordingly, the protruded portion **317** may have a weight corresponding to the weight of the OIS substrate **330** and the OIS coil **460** being disposed on opposite sides.

The OIS holder **310** may comprise a step portion **318.** The step portion **318** may be formed on an upper surface of the OIS holder **310.** The step portion **318** may comprise a groove being formed concavely on an upper surface of the OIS holder **310.** The step portion **318** may comprise a shape to avoid interference with the elastic member **540.** An elastic member **540** may be disposed in the step portion **318.** The upper surface of the elastic member **540** disposed in the step portion **318** may be disposed lower than the upper surface of the upper stopper **313.**

The OIS holder **310** may comprise a pillar part **319.** The pillar part **319** may be formed in an inner corner area of the OIS holder **310.** The pillar part **319** may be protruded inward from an inner corner area of the OIS holder **310.** The pillar part **319** may comprise four pillar parts. Grooves **312a** and **312b** in which the AF guide ball **510** is disposed may be formed in two of the four pillar parts. The pillar part **319** may be formed as two surfaces parallel to an optical axis are met.

The lens driving device **10** may comprise a metal plate **311.** The metal plate **311** may be a metal member. The metal plate **311** may be a dent prevention member. The OIS moving part **300** may comprise a metal plate **311.** The OIS holder **310** may comprise a metal plate **311.** The metal plate **311** may be formed in the OIS holder **310** by insert injection. The metal plate **311** may be understood as a component of the OIS holder **310.** Or, the metal plate **311** may be understood as a separate component of the OIS holder **310.** The metal plate **311** may be disposed in the OIS holder **310.** The metal plate **311** may be fixed to the OIS holder **310.** The metal plate **311** may be coupled to the OIS holder **310.** The metal plate **311** may be formed of a different material from the OIS holder **310.** The metal plate **311** may be formed of metal. The OIS holder **310** may be formed by injection molding. The metal plate **311** may have magnetism. An attractive force may act between the metal plate **311** and the OIS magnet **470.**

The lens driving device **10** may comprise an AF substrate **320.** The OIS moving part **300** may comprise an AF substrate **320.** The AF substrate **320** may be disposed in the OIS holder **310.** The AF substrate **320** may be fixed to the OIS holder **310.** The AF substrate **320** may be coupled to the OIS holder **310.** The AF substrate **320** may be disposed on an outer surface of the OIS holder **310.** The AF substrate **320** may be coupled to an outer side of the OIS holder **310.** The AF substrate **320** may be disposed on a side surface of the OIS holder **310.** The AF substrate **320** may be disposed inside the base **110.** The AF substrate **320** may be disposed inside the cover member **130.** The AF substrate **320** may be formed separately from the OIS substrate **330.** The AF substrate **320** may be spaced apart from the OIS substrate **330.** The AF substrate **320** may be separated from the OIS substrate **330.** As a modified embodiment, the AF substrate **320** may be coupled to the inside of the OIS holder **310.**

The AF substrate **320** may be electrically connected to the FPCB **120** through a plurality of second elastic members **542** and a plurality of second wires **532.** The AF substrate **320** may be electrically connected to a plurality of second elastic members **542.** The AF substrate **320** may be electrically connected to a plurality of second wires **532.** The AF substrate **320** may be electrically connected to the FPCB **120.**

The OIS holder 310 may comprise a hole. The AF substrate **320** may be disposed in a hole of the OIS holder **310.** The AF substrate **320** may be disposed parallel to the optical axis.

The AF substrate **320** may comprise a terminal **321.** The terminal **321** may be disposed at an upper end of the AF substrate **320.** The terminal **321** may be formed at an upper end of the AF substrate **320.** The terminal **321** may be disposed at an upper portion of the AF substrate **320.** The terminal **321** may be coupled to the elastic member **540.** The terminal **321** may be coupled to the elastic member **540** by a solder. The terminal **321** may be coupled to the elastic member **540** by a conductive epoxy. The terminal **321** may be coupled to the elastic member **540** by welding. The terminal **321** of the AF substrate **320** may be coupled to the second elastic member **542.**

The terminal **321** may pass through the elastic member **540.** The elastic member **540** may comprise a hole through which at least a portion of the terminal **321** penetrates. The terminal **321** of the AF substrate **320** may be inserted into the hole of the elastic member **540.** The terminal **321** may be formed on a side surface of the AF substrate **320.** The terminal **321** may be formed on an outer side surface of the AF substrate **320.** Or, the terminal **321** may be formed on an inner side surface of the AF substrate **320.**

The lens driving device **10** may comprise an OIS substrate **330.** The OIS moving part **300** may comprise an OIS substrate **330.** The OIS substrate **330** may be disposed in the OIS holder **310.** The OIS substrate **330** may be fixed to the OIS holder **310.** The OIS substrate **330** may be coupled to the OIS holder **310.** The OIS substrate **330** may be disposed on an outer surface of the OIS holder **310.** The OIS substrate **330** may be coupled to an outer side of the OIS holder **310.** The OIS substrate **330** may be disposed on two adjacent side surfaces of the OIS holder **310.** The OIS substrate **330** may be disposed inside the base **110.** The OIS substrate **330** may be disposed inside the cover member **130.** From the inside to the outside, the OIS coil **460,** the OIS substrate **330,** and the OIS magnet **470** may be disposed in that order.

As a modified embodiment, the OIS substrate **330** may be coupled to the inside of the OIS holder **310.** In this case, the OIS substrate **330,** the OIS coil **460,** and the OIS magnet **470** may be disposed in that order from the inside to the outside. At this time, the OIS coil **460** and the OIS magnet **470** may face each other directly.

At least a portion of the OIS substrate **330** may be disposed between the OIS coil **460** and the OIS magnet **470.** At least a portion of the OIS substrate **330** may be disposed to be overlapped with the OIS coil **460** and the OIS magnet **470.** The OIS substrate **330** may comprise a first portion being disposed between the OIS-x coil **461** and the OIS-x magnet **471.** The OIS substrate **330** may comprise a second portion being disposed between the OIS-y coil **462** and the OIS-y magnet **472.**

The OIS substrate **330** may be electrically connected to the FPCB **120** through a plurality of first elastic members **541** and a plurality of first wires **531.** The OIS substrate 330 may be electrically connected to a plurality of first elastic members **541.** The OIS substrate **330** may be electrically connected to a plurality of first wires **531.** The OIS substrate **330** may be electrically connected to the FPCB **120.**

The OIS substrate **330** may comprise a first portion being disposed on a first side surface of the OIS holder **310** and a second portion being disposed on a second side surface adjacent to a first **side** surface of the OIS holder **310.** The OIS substrate **330** may be formed integrally. The OIS substrate **330** may comprise a third portion connecting the first portion and the second portion.

The OIS holder **310** may comprise a hole. The OIS substrate **330** may be disposed in the hole of the OIS holder **310.** The OIS substrate **330** may be disposed parallel to an optical axis.

The OIS substrate **330** may comprise a terminal **331.** The terminal '**331** may be disposed at an upper end of the OIS substrate **330.** The terminal 331 may be formed at an upper end of the OIS substrate **330.** The terminal **331** may be disposed at an upper portion of the OIS substrate **330.** The terminal **331** may be coupled to the elastic member **540.** The terminal **331** may be coupled to the elastic member **540** by a solder. The terminal **331** may be coupled to the elastic member **540** by a conductive epoxy. The terminal **331** may be coupled to the elastic member **540** by welding. The terminal **331** of the OIS substrate 330 may be coupled to the first elastic member **541.**

The terminal **331** may pass through the elastic member **540.** The elastic member **540** may comprise a hole through which at least a portion of the terminal **331** penetrates. The terminal **331** of the OIS substrate **330** may be inserted into the hole of the elastic member **540.** The terminal **331** may be formed on a side surface of the OIS substrate **330.** The terminal **331** may be formed on an outer side surface of the OIS substrate **330.** Or, the terminal **331** may be formed on an inner side surface of the OIS substrate **330.**

The lens driving device **10** may comprise a yoke **340.** The OIS moving part **300** may comprise a yoke **340.** The yoke **340** may be disposed in the AF substrate **320.** An AF coil **410** may be disposed on a first surface of the AF substrate **320.** The yoke **340** may be disposed on a second surface of the AF substrate **320,** which is opposite to the first surface. The yoke **340** may be formed to have a size corresponding to the AF substrate **320.** The yoke **340** may be formed in a shape corresponding to the AF substrate **320.** The yoke **340** may be disposed at a position corresponding to the AF magnet **420.** An attractive force may be generated between the yoke **340** and the AF magnet **420.** Since the AF holder **210** is pressed toward the yoke **340** by the attractive force between the yoke **340** and the AF magnet **420,** so the AF guide ball **510** can be maintained without being separated between the grooves **211** of the AF holder **210** and the grooves **312a** and **312b** of the OIS holder **310.**

The lens driving device **10** may comprise a driving unit. The driving unit can move the lens. The driving unit can move the lens through electromagnetic force. The driving unit may comprise a coil and a magnet.

The lens driving device **10** may comprise an AF driving unit. The driving unit may comprise an AF driving unit. The AF driving unit can move the lens. The AF driving unit can move the lens in an optical axis direction. The AF driving unit can move the AF holder **210** in an optical axis direction. The AF driving unit can move the lens in an optical axis direction through electromagnetic force. The AF driving unit may comprise a coil and a magnet.

The lens driving device **10** may comprise an AF coil **410.** The AF driving unit may comprise an AF coil **410.** The AF coil **410** can move the AF holder **210** in an optical axis direction. The AF coil **410** may interact with the AF magnet **420.** The AF coil **410** may interact electromagnetically with the AF magnet **420.** When current is applied to the AF coil **410,** the AF coil **410** can move the AF magnet **420** through electromagnetic interaction with the AF magnet **420.** Or, when current is applied to the AF coil **410,** the AF coil **410** may move with respect to the AF magnet **420** through electromagnetic interaction with the AF magnet **420.** The AF coil **410** and the AF magnet **420** may face each other. The AF coil **410** may face the AF magnet **420.** The AF coil **410** may be disposed at a position corresponding to the AF magnet **420.** The AF coil **410** may be overlapped with the AF magnet **420** in a first direction perpendicular to the optical axis.

The AF coil **410** may be disposed in the AF substrate **320.** The AF coil **410** may be coupled to the AF substrate **320.** The AF coil **410** may be driving unit in the OIS holder **310.** The AF coil **410** may be fixed to the OIS holder **310.** The AF coil **410** may be coupled to the OIS holder **310.** The AF coil **410** may be disposed in the OIS moving part **300.** The AF coil **410** may be spaced apart from the AF holder **210.** The AF coil **410** may be spaced apart from the base **110.** The AF coil **410** may be spaced apart from the cover member **130.**

The lens driving device **10** may comprise an AF magnet **420.** The AF driving unit may comprise an AF magnet **420.** The AF magnet **420** can move the AF holder **210** in an optical axis direction. The AF magnet **420** may be disposed in the AF holder **210.** The AF magnet **420** may be fixed to the AF holder **210.** The AF magnet **420** may be coupled to the AF holder **210.** The AF magnet **420** can move together with the AF holder **210.** When current is applied to the AF coil **410,** the AF magnet **420** may move together with the AF holder **210.** The AF magnet **420** may be driving unit on the AF moving part **200.**

The AF magnet **420** may comprise a 4-pole magnet. The AF magnet **420** may comprise an N pole and an S pole in an upper portion and an N pole and an S pole in a lower portion. A neutral portion with no or weak polarity may be disposed between the upper and lower portions of the AF magnet **420.**

The lens driving device **10** may comprise an insert **421.** The insert **421** may be a yoke. The insert **421** may be disposed between the AF magnet **420** and the AF holder **210.** A groove **214** for disposing the insert **421** therein may be formed in the AF holder **210.** A portion of the insert **421** may be disposed in the groove **214.** The insert **421** may be bent at 90 degrees and inserted into the groove **214** of the AF holder **210.** The insert **421** can increase the adhesion force of the AF magnet **420.**

The lens driving device **10** may comprise an AF driver IC **430.** The AF driving unit may comprise an AF driver IC **430.** The AF driver IC **430** may be electrically connected to the AF coil **410.** The AF driver IC **430** may apply current to the AF coil **410.** The AF driver IC **430** can control the current being applied to the AF coil **410.** The AF driver IC **430** may be disposed in the AF substrate **320.** The AF driver IC **430** may be disposed inside the AF coil **410.** The AF driver IC **430** may be disposed in a hollow of the AF coil **410.**

The AF driver IC **430** may comprise a Hall element. The AF driver IC **430** may comprise a Hall IC. The AF driver IC **430** may comprise a Hall sensor. The AF driver IC **430** may comprise a sensor. The AF driver IC **430** can detect the magnetic force of the AF magnet **420.** Through this, the AF driver IC **430** can detect the movement of the AF magnet **420** and the AF holder **210.**

The lens driving device **10** may comprise an OIS driving unit. The driving unit may comprise an OIS driving unit. The OIS driving unit can move the lens. The OIS driving unit can move the lens in a direction perpendicular to the optical axis. The OIS driving unit can move the AF holder **210** and the OIS holder **310** in a direction perpendicular to the optical axis. The OIS driving unit can move the lens in a direction perpendicular to the optical axis through electromagnetic force. The OIS driving unit may comprise a coil and a magnet.

The lens driving device **10** may comprise an OIS coil **460.** The OIS driving unit may comprise an OIS coil **460.** The OIS coil **460** can move the OIS holder **310** in a direction perpendicular to the optical axis. The OIS coil **460** can move the AF holder **210** in a direction perpendicular to the optical axis. The OIS coil **460** can move the AF holder **210** and the OIS holder 310 together in a direction perpendicular to the optical axis. The OIS coil **460** may interact with OIS magnet **470.** The OIS coil **460** may electromagnetically interact with the OIS magnet **470.** When current is applied to the OIS coil **460,** the OIS coil **460** can move with respect to the OIS magnet **470** through electromagnetic interaction with the OIS magnet **470.** Or, when current is applied to the OIS coil 460, the OIS coil **460** may move the OIS magnet **470** through electromagnetic interaction with the OIS magnet **470.** The OIS coil **460** and the OIS magnet **470** may face each other. The OIS coil **460** may face the OIS magnet **470.** The OIS coil **460** may be disposed in a position corresponding to the OIS magnet **470.**

The OIS coil **460** may comprise a first coil being overlapped with the OIS magnet **470** in a first direction perpendicular to the optical axis, and a second coil being overlapped therewith in a second direction perpendicular to both the optical axis and the first direction. Any one of the first coil and the second coil is an OIS-x coil **461** and the other one may be an OIS-y coil **462.**

The OIS coil **460** may be disposed in the OIS substrate **330.** The OIS coil **460** may be fixed to the OIS substrate **330.** The OIS coil **460** may be coupled to the OIS substrate **330.** The OIS coil **460** may be disposed in the OIS holder 310. The OIS coil **460** may be fixed to the OIS holder **310.** The OIS coil **460** may be coupled to the OIS holder **310.** The OIS coil **460** may be disposed in the OIS moving part **300.** The OIS coil **460** may be spaced apart from the AF holder **210.** The OIS coil **460** may be spaced apart from the base 110. The OIS coil **460** may be spaced apart from the cover member **130.**

The lens driving device **10** may comprise an OIS-x coil **461.** The OIS driving unit may comprise an OIS-x coil **461.** The OIS coil **460** may comprise an OIS-x coil **461.** The OIS-x coil **461** may be disposed in a first direction perpendicular to the optical axis. The OIS-x coil **461** can move the OIS holder **310** in an x-direction perpendicular to the optical axis. The OIS-x coil **461** and the OIS-x magnet **471** may face each other. The OIS-x coil **461** may face the OIS-x magnet **471.** The OIS-x coil **461** may be disposed in a position corresponding to the OIS-x magnet **471.** The OIS-x coil **461** may be overlapped with the OIS-x magnet **471** in a second direction perpendicular to both the optical axis and the first direction. The OIS-x coil **461** can move the OIS holder **310** in a second direction through interaction with the OIS-x magnet **471.**

The lens driving device 10 may comprise an OIS-y coil **462.** The OIS driving unit may comprise an OIS-y coil **462.** The OIS coil **460** may comprise an OIS-y coil **462.** The OIS-y coil **462** may be disposed in a second direction perpendicular to both the optical axis and the first direction. The OIS-y coil **462** may be disposed in a direction perpendicular to the OIS-x coil **461.** The OIS-y coil **462** can move the OIS holder **310** in a y-direction perpendicular to the optical axis. The OIS-y coil **462** and the OIS-y magnet **472** may face each other. The OIS-y coil **462** may face the OIS-y magnet **472.** The OIS-y coil **462** may be disposed in a position corresponding to the OIS-y magnet **472.** The OIS-y coil 462 may be overlapped with the OIS-y magnet **472** in a first direction perpendicular to the optical axis. The OIS-y coil **462** can move the OIS holder **310** in a first direction through interaction with the OIS-y magnet **472.**

The lens driving device 10 may comprise an OIS magnet **470.** The OIS driving unit may comprise an OIS magnet **470.** The OIS magnet **470** can move the OIS holder **310** in a direction perpendicular to the optical axis. The OIS magnet **470** may be disposed in the base **110.** The OIS magnet **470** may be fixed to the base **110.** The OIS magnet **470** may be coupled to the base **110.** The OIS magnet **470 can** move the OIS holder **310** together with the OIS coil **460.** When current is applied to the OIS coil **460,** the OIS magnet **470** can move the OIS holder **310** together with the OIS coil **460.** The OIS magnet **470** may be disposed in the fixed part **100.**

The OIS magnet **470** may comprise a two-pole magnet. The OIS magnet **470** may comprise two magnets. The OIS magnet **470** may comprise a plurality of magnets. The OIS magnet **470** may comprise two magnets being disposed in directions perpendicular to each other. Each of the two magnets may be a two-pole magnet.

The lens driving device **10** may comprise an OIS-x magnet **471.** The OIS driving unit may comprise an OIS-x magnet **471.** The OIS magnet **470** may comprise an OIS-x magnet **471.** The OIS-x magnet **471** may interact with OIS-x coil **461.** The OIS-x magnet **471** may electromagnetically interact with the OIS-x coil **461.** The OIS-x magnet **471** may be disposed on a first side surface of the base **110.** The OIS-x magnet **471** can be disposed in one direction. The OIS-x magnet **471** may be disposed parallel to an optical axis in the base **110.**

The lens driving device **10** may comprise an OIS-y magnet **472.** The OIS driving unit may comprise an OIS-y magnet **472.** The OIS magnet **470** may comprise an OIS-y magnet **472.** The OIS-y magnet **472** may interact with OIS-y coil **462.** The OIS-y magnet **472** may electromagnetically interact with the OIS-y coil **462.** The OIS-y magnet **472** may be disposed on a second side surface adjacent to the first side surface of the base **110.** The OIS-y magnet **472** may be disposed in a direction perpendicular to one direction. The OIS-y magnet **472** may be disposed parallel to an optical axis in the base **110.**

The lens driving device 10 may comprise an OIS driver IC **480.** The OIS driving unit may comprise an OIS driver IC **480.** The OIS driver IC **480** may be electrically connected to the OIS coil **460.** The OIS driver IC **480** may apply current to the OIS coil **460.** The OIS driver IC **480** can control the current applied to the OIS coil **460.** The OIS driver IC **480** may be disposed in the OIS substrate **330.** The OIS driver IC **480** may be disposed inside the OIS coil **460.** The OIS driver IC **480** may be disposed in a hollow of the OIS coil **460.**

The OIS driver IC **480** may comprise a Hall element. The OIS driver IC **480** may comprise a Hall IC. The OIS driver IC **480** may comprise a Hall sensor. OIS driver IC **480** may comprise a sensor. The OIS driver IC **480** can detect the magnetic force of the OIS magnet **470.** Through this, the OIS driver IC **480** can detect the movement of the OIS magnet **470** and the OIS holder **310.**

The lens driving device **10** may comprise an OIS-x driver IC **481.** The OIS driving unit may comprise an OIS-x driver IC **481.** The OIS driver IC **480** may comprise an OIS-x driver IC **481.** The OIS-x driver IC **481** may be electrically connected to the OIS-x coil **461.** The OIS-x driver IC **481** can apply current to the OIS-x coil **461.** The OIS-x driver IC **481** can control the current being applied to the OIS-x coil **461.** The OIS-x driver IC **481** may be disposed inside the OIS-x coil **461.** The OIS-x driver IC **481** may be disposed in a hollow of the OIS-x coil **461.**

The OIS-x driver IC **481** may comprise a Hall element. The OIS-x driver IC **481** may comprise a Hall IC. The OIS-x driver IC **481** may comprise a Hall sensor. The OIS-x driver IC **481** may comprise a sensor. The OIS-x driver IC **481** can detect the magnetic force of the OIS-x magnet **471.** Through this, the OIS-x driver IC **481** can detect the movement of the OIS-x magnet **471** and the OIS holder **310.**

The lens driving device **10** may comprise an OIS-y driver IC **482.** The OIS driving unit may comprise an OIS-y driver IC **482.** The OIS driver IC **480** may comprise an OIS-y driver IC **482.** The OIS-y driver IC **482** may be electrically connected to the OIS-y coil **462.** The OIS-y driver IC **482** may apply current to the OIS-y coil **462.** The OIS-y driver IC **482** can control the current being applied to the OIS-y coil **462.** The OIS-y driver IC **482** may be disposed inside the OIS-y coil **462.** The OIS-y driver IC **482** may be disposed in a hollow of the OIS-y coil **462.**

The OIS-y driver IC **482** may comprise a Hall element. The OIS-y driver IC **482** may comprise a Hall IC. The OIS-y driver IC **482** may comprise a Hall sensor. The OIS-y driver IC **482** may comprise a sensor. The OIS-y driver IC **482** can detect the magnetic force of the OIS-y magnet **472.** Through this, the OIS-y driver IC **482** can detect the movement of the OIS-y magnet **472** and the OIS holder **310.**

The lens driving device **10** may comprise a guide unit. The guide unit may guide the movement of the lens. The guide unit may comprise a first guide unit that guides the movement of the lens in an optical axis direction. The guide unit may comprise a second guide unit that guides the movement of the lens in a direction perpendicular to the optical axis.

The lens driving device **10** may comprise an AF guide ball **510.** The guide unit may comprise an AF guide ball **510.** The AF guide ball **510** may be disposed between the OIS holder **310** and the AF holder **210.** The AF guide ball **510** may be disposed in the OIS holder **310** and the AF holder **210.** The AF guide ball **510** can connect the OIS holder **310** and the AF holder **210.** The AF guide ball **510** may be in contact with the OIS holder **310** and the AF holder **210.** However, when grease is applied to the surface of the AF guide ball **510,** the AF guide ball **510** does not directly contact the OIS holder **310** and the AF holder **210,** but the grease may be in contact with the OIS holder **310** and the AF holder **210.** The AF guide ball **510** may be disposed between the inner side surface of the OIS holder **310** and the outer side surface of the AF holder **210.**

The AF guide ball **510** may have a spherical shape. The AF guide ball **510** may be a ball. The AF guide ball **510** can roll along the surface of the AF holder **210.** The AF guide ball **510** can move along the surface of the AF holder **210.** The AF guide ball **510** can roll along the surface of the OIS holder **310.** The AF guide ball **510** can move along the surface of the OIS holder **310.**

The AF guide ball **510** may guide the movement of the AF holder **210** in an optical axis direction. The AF guide ball **510** may limit the movement of the AF holder **210** with respect to the OIS holder **310** in an optical axis direction. The AF guide ball **510** may guide the movement of the AF holder **210** in an optical axis direction.

The AF guide ball **510** may comprise a plurality of AF guide balls. A plurality of AF guide balls may be disposed to be overlapped with each other in an optical axis direction. A plurality of AF guide balls may be overlapped with each other in a vertical direction. All of the plurality of AF guide balls may be disposed on a virtual plane parallel to an optical axis.

The AF guide ball **510** may comprise six balls. The AF guide ball **510** may comprise a first ball having a first diameter and a second ball having a second diameter smaller than the first diameter. The AF guide ball **510** may comprise three balls being disposed on one side of the AF magnet **420** and three balls being disposed on the other side of the AF magnet **420.** The three balls may comprise two first balls and one second ball. The second ball may be disposed between the two first balls.

The lens driving device **10** may comprise an OIS guide ball **520.** The guide unit may comprise an OIS guide ball **520.** The OIS guide ball **520** may be disposed between the base **110** and the OIS holder **310.** The OIS guide ball **520** may be disposed in the base **110** and the OIS holder **310.** The OIS guide ball **520** can connect the base **110** and the OIS holder **310.** The OIS guide ball **520** may contact the base **110** and the OIS holder **310.** However, when grease is applied to the surface of the OIS guide ball **520,** the OIS guide ball **520** does not directly contact the base **110** and the OIS holder **310,** but the grease may be in contact with the base **110** and the OIS holder **310.**

The OIS guide ball **520** may be disposed more outward than the area of the OIS moving part **300** being connected to the wire **530.** When viewed from above, the OIS guide ball **520** may be disposed more outward than the area of the OIS moving part **300** being connected to the wire **530.** The OIS guide ball **520** may be disposed more outward than the wire **530.** The OIS guide ball **520** may be disposed more outward than the AF guide ball **510.**

The OIS guide ball **520** may be disposed between the metal plate **111** of the base **110** and the metal plate **311** of the OIS holder **310.** The OIS guide ball **520** may be disposed in the metal plate **111** of the base **110** and the metal plate **311** of the OIS holder **310.** The OIS guide ball **520** can connect the metal plate **111** of the base **110** and the metal plate **311** of the OIS holder **310.** The OIS guide ball **520** may be in contact with the metal plate **111** of the base **110** and the metal plate **311** of the OIS holder **310.** However, when grease is applied to the surface of the OIS guide ball **520,** the OIS guide ball **520** does not directly contact the two metal plates **111** and **311,** but the grease may be in contact with the two metal plates **111** and **311.** For example, the metal plate **111** being disposed in the base **110** may be non-magnetic and the metal plate **311** being disposed in the OIS holder **310** may be magnetic.

The OIS guide ball **520** may have a spherical shape. The OIS guide ball **520** may be a ball. The OIS guide ball **520** can roll along the surface of the OIS holder **310.** The OIS guide ball **520** can move along the surface of the OIS holder **310.** The OIS guide ball **520** may roll along the surface of the base **110.** The OIS guide ball **520** can move along the surface of the base **110.**

The OIS guide ball **520** may guide the movement of the OIS holder **310** in a direction perpendicular to the optical axis. The OIS guide ball **520** may limit the movement of the OIS holder **310** with respect to the base **110** in a direction perpendicular to the optical axis. The OIS guide ball **520** may guide the movement of the OIS holder **310** in a direction perpendicular to the optical axis.

The OIS guide ball **520** may be disposed higher than the ball being disposed highest among the plurality of AF guide balls **510.** The OIS guide ball **520** may be disposed higher than the AF coil **410.** The OIS guide ball **520** may be disposed higher than the AF magnet **420.** The OIS guide ball **520** may be disposed higher than the OIS coil **460.** The OIS guide ball **520** may be disposed higher than the OIS magnet **470.** The OIS guide ball **520** may be disposed on a lower surface of the upper plate unit **315** of the OIS holder **310.** The OIS guide ball 520 may be disposed in a groove being formed on an upper surface of the side plate unit **113** of the base **110.**

The OIS guide ball **520** may be disposed between the upper plate of the base **110** and the upper plate unit **315** of the OIS holder **310.** The OIS guide ball **520** may guide the OIS holder **310** to move in an x-direction and a y-direction perpendicular to the optical axis with respect to the base **110.** Here, the x-direction may be an x-axis direction and the y-direction may be a y-axis direction.

The upper plate of the base **110** may comprise a groove in which the OIS guide ball **520** is disposed. The groove of the base **110** may have a size larger than the maximum diameter of the OIS guide ball **520.** When arranging to match the center of the OIS guide ball **520** with the center of the groove of the base **110,** the OIS guide ball **520** can be spaced apart from an inner side surface of the groove of the base **110** in x-direction and y-direction.

The OIS guide ball **520** may comprise a plurality of OIS guide balls. A plurality of OIS guide balls may be disposed to be overlapped with one another in a direction perpendicular to the optical axis. A plurality of OIS guide balls may be overlapped with one another in a horizontal direction. All of the plurality of OIS guide balls may be disposed on a virtual plane perpendicular to the optical axis. A plurality of OIS guide balls may be formed to have the same size and shape.

The OIS guide ball **520** may have first to fourth unit balls. The OIS guide ball **520** may have only the first to fourth unit balls. The first unit ball can guide the OIS holder **310** to move in an x-direction and a y-direction perpendicular to the optical axis with respect to the base **110.** Each of the first to fourth unit balls can guide the OIS holder **310** to move in an x-direction and a y-direction perpendicular to the optical axis with respect to the base **110.** The first unit ball may guide the OIS holder **310** to move with respect to the base **110** in a first direction perpendicular to the optical axis and in a second direction perpendicular to both the optical axis and the first direction. As a modified embodiment, the OIS guide ball **520** may comprise first to fourth unit balls. That is, in the modified embodiment, the OIS guide ball **520** may comprise additional unit balls in addition to the first to fourth unit balls. The OIS guide ball **520** may comprise four balls.

The four balls may be overlapped with one another in a direction perpendicular to the optical axis. Four balls may be disposed in each of the four corner areas of the base **110.** Four balls can be disposed in each of the four corner areas of the upper plate unit **315** of the OIS holder **310.**

When the OIS holder **310** moves, the OIS guide ball **520** may guide the base **110** to move in a direction perpendicular to the optical axis. The OIS guide ball **520** may guide the movement of the OIS holder **310** in an x-axis direction. The OIS guide ball **520** may guide the movement of the OIS holder **310** in a y-axis direction. The OIS guide ball **520** can guide the movement of the OIS holder **310** in both the x-axis and y-axis directions. That is, the OIS guide ball **520** can be formed as an all-in-one type with one ball without distinguishing between the x-axis ball and the y-axis ball. Since the OIS guide ball **520** is provided as an all-in-one type, crosstalk, which affects the x-axis driving force and y-axis driving force, may be a problem, in the present embodiment, cross talk can be minimized through the wire **530.** The OIS guide ball **520** may be disposed between the OIS holder **310** and the base **110** in an optical axis direction.

Pressure on the OIS guide ball **520** may be applied by the wire **530** and the elastic member **540.** That is, the OIS holder **310** is pressed in the direction towards the base 110 by the elastic force and rigidity of the wire **530** and the elastic member **540,** thereby preventing the OIS guide ball **520** from being separated. Or, the OIS holder **310** may be provided with a yoke being disposed at a position corresponding to the OIS magnet **470.** In this case, the phenomenon of the OIS guide ball **520** being separated due to the attractive force between the yoke and the OIS magnet **470** can be prevented.

The OIS guide ball **520** may be disposed in the metal plates **111** and **311.** The flatness of the rolling surface of the OIS guide ball **520** can be easily managed by the metal plates **111** and **311.** In addition, the metal plates **111** and **311** can prevent dents from occurring in the OIS guide ball **520** and/or the OIS holder **310** and the base **110** due to impact. The metal plates **111** and **311** may be yokes.

The OIS guide ball **520** may be protruded beyond the upper surface of the base **110.** The OIS guide ball **520** may be protruded above the upper surface of the base **110.** The upper surface of the base **110** and the upper plate unit **315** of the OIS holder **310** may be spaced apart as much as the protruded height of the OIS guide ball **520.** The OIS guide ball **520** may be disposed in a groove being recessed from the upper surface of the base **110.** At this time, the distance between the upper surface of the base **110** and the upper plate unit **315** of the OIS holder **310** may be 80 to 450 *µ*m. Or, the distance between the upper surface of the base **110** and the upper plate unit **315** of the OIS holder **310** may be 80 to 600 *µ*m. The distance between the upper surface of the base **110** and the upper plate unit **315** of the OIS holder **310** may be, for example, 150 *µ*m. The distance between the upper surface of the base **110** and the upper plate unit **315** of the OIS holder **310** may be greater than the distance between the OIS holder **310** and the upper plate **131** of the cover member **130.**

The lens driving device **10** may comprise a wire **530.** The guide portion may comprise a wire **530.** The wire **530** may be an elastic member. The wire **530** may have elasticity. The wire **530** may be formed of metal. The wire **530** may connect the FPCB **120** and the elastic member **540.** The upper end portion of the wire **530** may be coupled to the elastic member **540.** The upper end portion of the wire **530** may be coupled to the elastic member **540** with a solder. The lower end portion of the wire **530** may be coupled to the FPCB **120.** The lower end portion of the wire **530** may be coupled to the FPCB **120** by a solder. The wire **530** may be disposed parallel to the optical axis. The wire **530** can elastically support the movement of the OIS moving part **300.**

The wire **530** may comprise a plurality of wires. The wire **530** may comprise eight wires. Two of the wires **530** may be disposed in each of the four corner areas of the OIS holder **310.** Or, the wire **530** may comprise four wires. Two wires **530** may be coupled to at least one corner of the OIS holder **310.**

The wire **530** may comprise a first wire **531.** The wire **530** may comprise a plurality of first wires **531** being spaced apart from one another. The first wire **531** may comprise a plurality of first wires **531.** The first wire **531** may comprise a plurality of first wires **531** being spaced apart from each other. The first wire **531** may be electrically connected to the OIS substrate **330.**

The wire **530** may comprise a second wire **532.** The wire **530** may comprise a plurality of second wires **532** being spaced apart from one another. The second wire **532** may comprise a plurality of second wires **532.** The second wire **532** may comprise a plurality of second wires **532** being spaced apart from one another. The second wire **532** may be electrically connected to the AF substrate **320.**

The lens driving device **10** may comprise an elastic member **540.** The guide portion may comprise an elastic member **540.** The elastic member **540** may comprise a leaf spring. The elastic member **540** may have elasticity. The elastic member **540** may be formed of metal. The elastic member **540** may be coupled to the OIS holder **310.** The elastic member **540** may comprise a portion being coupled to the OIS holder **310.** The elastic member **540** may comprise a portion being disposed in the OIS holder **310.** The elastic member **540** may comprise a portion fixed to the OIS holder **310.** The elastic member 540 may be coupled to the wire **530.** The elastic member **540** may be coupled to the AF substrate **320.** The elastic member **540** may be coupled to the OIS substrate **330.**

The elastic member **540** may comprise a first elastic member **541.** The elastic member **540** may comprise a plurality of first elastic members **541** being spaced apart from one another. The first elastic member **541** may comprise a plurality of first elastic members **541.** The first elastic member **541** may comprise a plurality of first elastic members **541** being spaced apart from one another. The first elastic member **541** may be a 'first elastic unit'. The first elastic member **541** may be electrically connected to the OIS substrate **330.**

The elastic member **540** may comprise a second elastic member **542.** The elastic member **540** may comprise a plurality of second elastic members **542** being spaced apart from one another. The second elastic member **542** may comprise a plurality of second elastic members **542.** The second elastic member **542** may comprise a plurality of second elastic members **542** being spaced apart from one another. The second elastic member **542** may be a 'second elastic unit'. The second elastic member **542** may be electrically connected to the AF substrate **320.**

The elastic member **540** may comprise a first coupling part **545.** The first coupling part **545** may be an OIS holder coupling part. The first coupling part **545** may be coupled to the OIS holder **310.** The first coupling part **545** may be disposed with the OIS holder **310.** The first coupling part **545** may be fixed to the OIS holder 310. The first coupling part **545** may comprise a hole being coupled to a protrusion of the OIS holder **310.** The first coupling part **545** may be coupled to the OIS holder **310** through an adhesive.

The elastic member **540** may comprise a second coupling part **546.** The second coupling part **546** may be a wire coupling part. The second coupling part **546** may be coupled to the wire **530.** The second coupling part **546** may comprise a hole through which the wire **530** passes. The second coupling part **546** may be coupled to the wire **530** by a solder. The solder may be disposed on an upper surface of the second coupling part **546.**

The elastic member **540** may comprise a third coupling part **547.** The third coupling part **547** may be a substrate terminal coupling part. The third coupling part **547** may be coupled to the substrate. The third coupling part **547** may comprise a first portion being coupled to the AF substrate **320.** The third coupling part **547** may comprise a first portion being coupled to the terminal **321** of the AF substrate **320.** The third coupling part **547** may comprise a second portion being coupled to the OIS substrate **330.** The third coupling part **547** may comprise a second portion being coupled to the terminal **331** of the OIS substrate **330.**

The elastic member **540** may comprise a first connection part **548.** The first connection part **548** may be an inner connection part. The first connection part **548** may connect the first coupling part **545** and the second coupling part **546.** The first connection part **548** can elastically connect the first coupling part **545** and the second coupling part **546.**

The elastic member **540** may comprise a second connection part **549.** The second connection part **549** may be an inner connection part. The second connection part **549** may connect the first coupling part **545** and the third coupling part **547.** The second connection part **549** can elastically connect the first coupling part **545** and the third coupling part **547.**

Hereinafter, the operation of the lens driving device according to the present embodiment will be described with reference to the drawings.

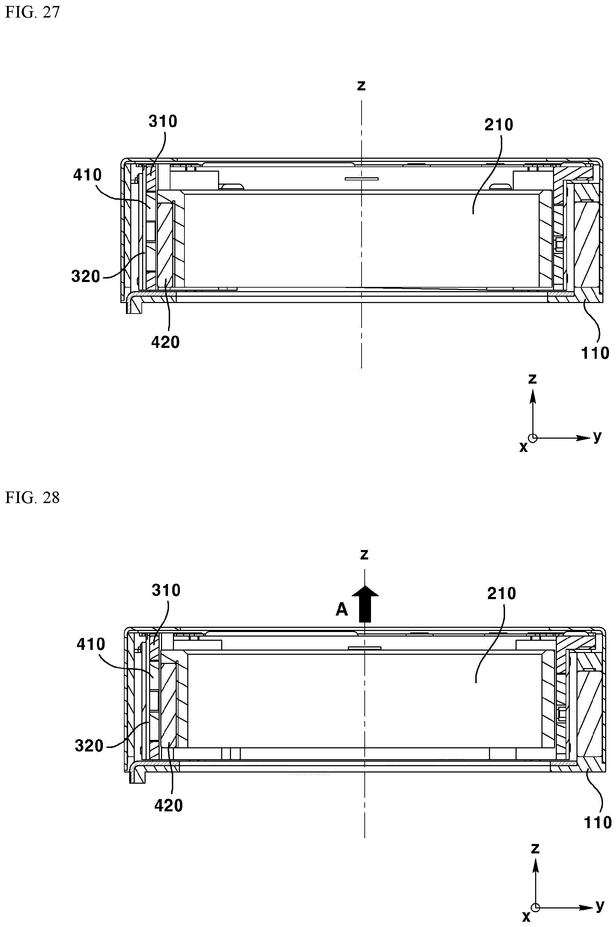

First, the autofocus function will be described with reference to FIGS. 27 and 28.

FIGS. 27 and 28 are diagrams for explaining autofocus driving of the lens driving device according to the present embodiment.

The AF moving part **200** may be disposed in the body unit of the FPCB **120** at an initial position where no current is applied to the AF coil **410.** Or, the AF moving part **200** may be disposed on an upper surface of the bottom plate unit **112** of the base 110 in an initial position where no current is applied to the AF coil **410.** When current is applied to the AF coil **410,** the AF magnet **420** can move upward along an optical axis due to electromagnetic interaction between the AF coil **410** and the AF magnet **420** (see A in FIG. 28). At this time, the AF holder **210** and the lens may move together with the AF magnet **420.** Accordingly, the distance between the lens and the image sensor can be changed to adjust the focus of the image being formed on the image sensor through the lens.

Meanwhile, during the movement of the AF magnet **420,** the AF driver IC **430** can detect the amount of movement or position of the AF magnet **420** by detecting the strength of the magnetic field of the AF magnet **420.** The movement amount or position of the AF magnet **420** detected by the AF driver IC **430** can be used for autofocus feedback control.

As another example, the AF moving part **200** may be disposed in a position spaced apart from the base **110** and the FPCB **120** in an initial position where no current is applied to the AF coil **410.** At this time, when a reverse current is applied to the AF coil **410,** the AF moving part **200** may move downward toward the lower plate of the base **110.** Conversely, when a forward current is applied to the AF coil **410,** the AF moving part **200** may move upward toward the upper plate **131** of the cover member **130.** Even in this case, the lens moves together with the AF moving part **200** so that the distance between the lens and the image sensor can be adjusted.

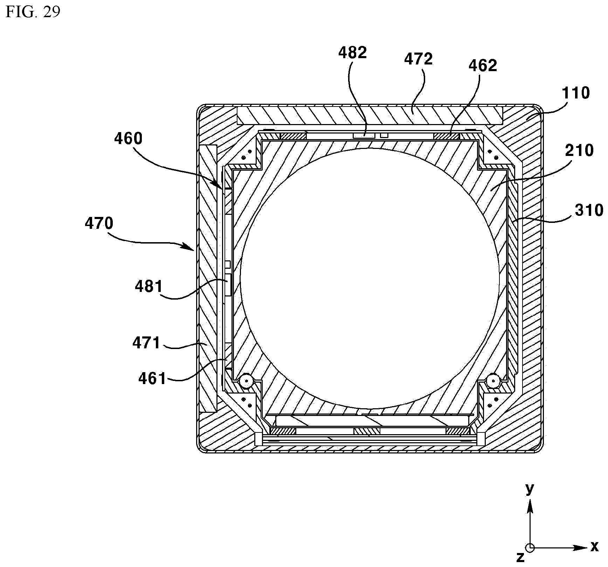

Next, the optical image stabilization function will be described with reference to FIGS. 29 to 31.

FIGS. 29 to 31 are diagrams for explaining optical image stabilization operation of a lens driving device according to the present embodiment.

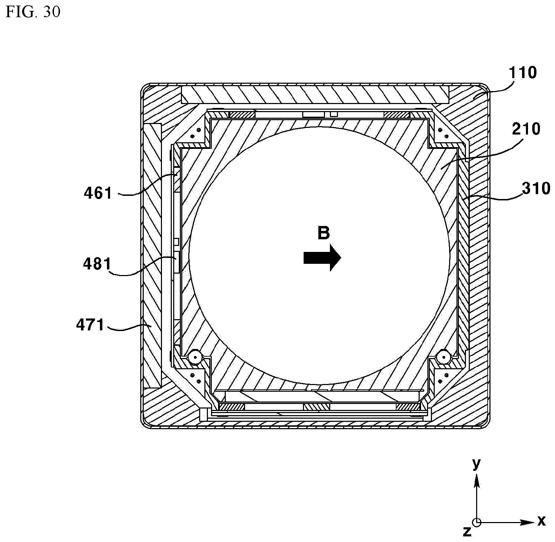

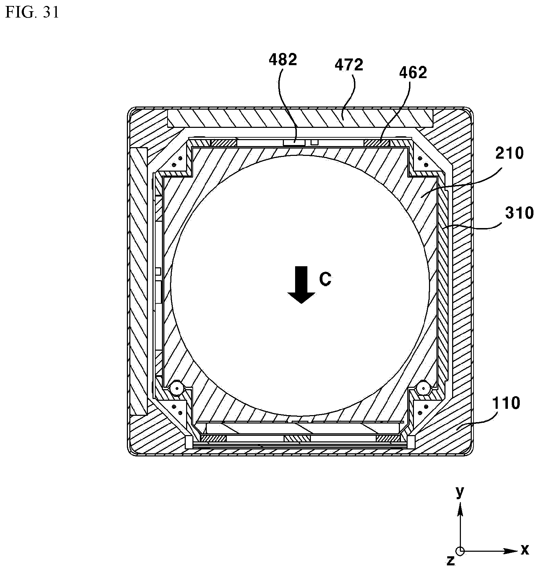

The OIS moving part **300** may be disposed to be spaced apart from the fixed part **100** at an initial position where no current is applied to the OIS coil **460.** At this time, when a forward current is applied to the OIS-x coil **461,** due to the electromagnetic interaction between the OIS-x coil **461** and the OIS-x magnet **471,** the OIS-x coil **461** can move in a direction away from the OIS-x magnet **471** in an x-axis direction (see **B** in FIG. 30). Conversely, when a reverse current is applied to the OIS-x coil **461,** the OIS-x coil **461** can move in a direction closer to the OIS-x magnet **471** in an x-axis direction by electromagnetic interaction between the OIS-x coil **461** and the OIS-x magnet **471.** Meanwhile, when a forward current is applied to the OIS-y coil **462,** the OIS-y coil **462** can move in a direction away from the OIS-y magnet **472** in a y-axis direction by the electromagnetic interaction between the OIS-y coil **462** and the OIS-y magnet **472** (see C in FIG. 31). Conversely, when a reverse current is applied to the OIS-y coil **462,** the OIS-y coil **462** may move in a direction closer to the OIS-y magnet **472** in a y-axis direction by electromagnetic interaction between the OIS-y coil **462** and the OIS-y magnet **472.**

In the previous description, the lens can move integrally with the OIS coil **460** along with the AF mover **200** and the OIS mover **300.**

During the movement of the OIS coil **460,** the OIS driver IC **480** can detect the amount of movement or position of the OIS magnet **470** by detecting the strength of the magnetic field of the OIS magnet **470.** The movement amount or position of the OIS magnet **470** detected by the OIS driver IC **480** can be used for optical image stabilization feedback control.

Hereinafter, a camera device according to the present embodiment will be described with reference to the drawings.

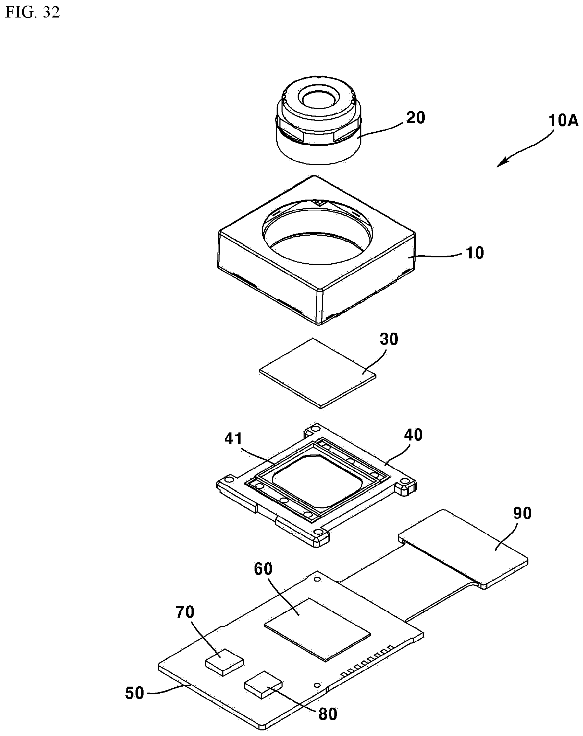

FIG. 32 is an exploded perspective view of a camera device according to the present embodiment.

The camera device **10A** may comprise a camera module.

The camera device **10A** may comprise a lens module **20.** The lens module **20** may comprise at least one lens. The lens may be disposed in a position corresponding to the image sensor **60.** The lens module **20** may comprise a lens and a barrel. The lens module **20** may be coupled to the AF holder **210** of the lens driving device **10.** The lens module **20** may be coupled to the AF holder **210** by screw-coupling and/or an adhesive. The lens module **20** can be moved integrally with the AF holder **210.** The lens may be coupled to the AF holder **210.**

The camera device **10A** may comprise a filter **30.** The filter **30** may serve to block light in a specific frequency band from light passing through the lens module **20** from entering the image sensor **60.** The filter **30** may be disposed parallel to an x-y plane. The filter **30** may be disposed between the lens module **20** and the image sensor **60.** The filter **30** may be disposed in sensor base **40.** As a modified embodiment, the filter **30** may be disposed in the base **110.** The filter **30** may comprise an infrared filter. The infrared filter may block light in the infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruded portion **41** on which the filter **30** is disposed. An opening may be formed in a portion of the sensor base **40** where the filter **30** is disposed to allow light passing through the filter **30** to enter the image sensor **60.** An adhesive member may couple or attach the base **310** of the lens driving device **10** to the sensor base **40.** The adhesive member may additionally serve to prevent foreign substances from entering the interior of the lens driving device **10.** The adhesive member may comprise one or more among epoxy, thermosetting adhesive, and ultraviolet curing adhesive.

The camera device **10A** may comprise a printed circuit board (PCB) **50.** The printed circuit board **50** may be a substrate or a circuit board. A lens driving device **10** may be disposed in the printed circuit board **50.** A sensor base **40** may be disposed between the printed circuit board **50** and the lens driving device **10.** The printed circuit board **50** may be electrically connected to the lens driving device **10.** An image sensor **60** may be disposed in the printed circuit board **50.** The printed circuit board **50** may be equipped with various circuits, elements, and control units to convert the image being formed in the image sensor **60** into an electrical signal and transmit it to an external device.

The camera device **10A** may comprise an image sensor **60.** The image sensor **60** may be a configuration in which an image is formed as a light passing through the lens and the filter **30** is incident thereon. The image sensor **60** may be mounted on the printed circuit board **50.** The image sensor **60** may be electrically connected to the printed circuit board **50.** For example, the image sensor **60** may be coupled to the printed circuit board **50** using surface mounting technology (SMT). As another example, the image sensor **60** may be coupled to the printed circuit board **50** using a flip chip technology. The image sensor **60** may be disposed so that its optical axis coincides with that of the lens. That is, the optical axis of the image sensor **60** and the optical axis of the lens may be aligned. The image sensor **60** can convert light being irradiated to the effective image area of the image sensor **60** into an electrical signal. The image sensor **60** may be one among a charge coupled device (CCD), a metal oxide semiconductor (MOS), a CPD, and a CID.

The camera device **10A** may comprise a motion sensor **70.** The motion sensor **70** may be mounted on the printed circuit board **50.** The motion sensor **70** may be electrically connected to the control unit **80** through a circuit pattern provided on the printed circuit board **50.** The motion sensor **70** may output rotational angular velocity information resulting from the movement of the camera device **10A.** The motion sensor **70** may comprise a 2-axis or 3-axis gyro sensor, or an angular velocity sensor.

The camera device **10A** may comprise a control unit **80.** The control unit **80** may be disposed in the printed circuit board **50.** The control unit **80** may be electrically connected to the coil **330** of the lens driving device **10.** The control unit **80** can individually control the direction, intensity, and amplitude of the current being supplied to the coil **330.** The control unit **80** may control the lens driving device **10** to perform an autofocus function and/or an optical image stabilization function. Furthermore, the control unit **80** may perform autofocus feedback control and/or optical image stabilization feedback control for the lens driving device **10.**

The camera device **10A** may comprise a connector **90.** The connector **90** may be electrically connected to the printed circuit board **50.** The connector **90** may comprise a port for electrical connection to an external device.

Hereinafter, an optical instrument according to the present embodiment will be described with reference to the drawings.

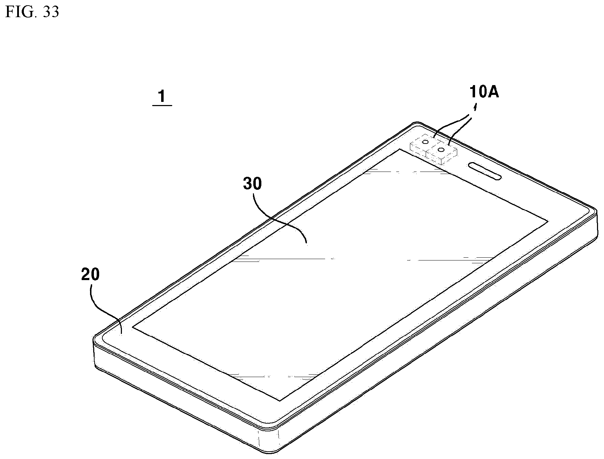

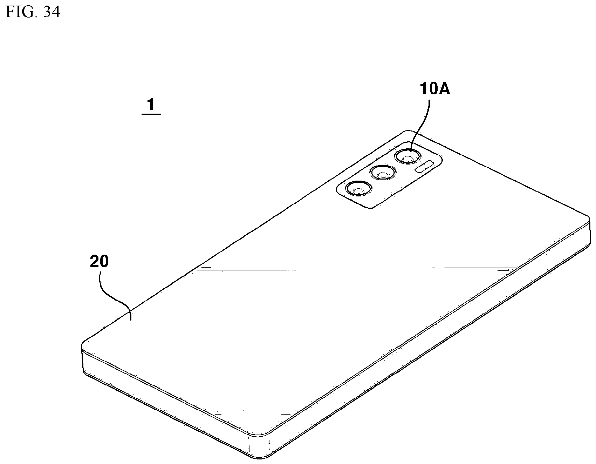

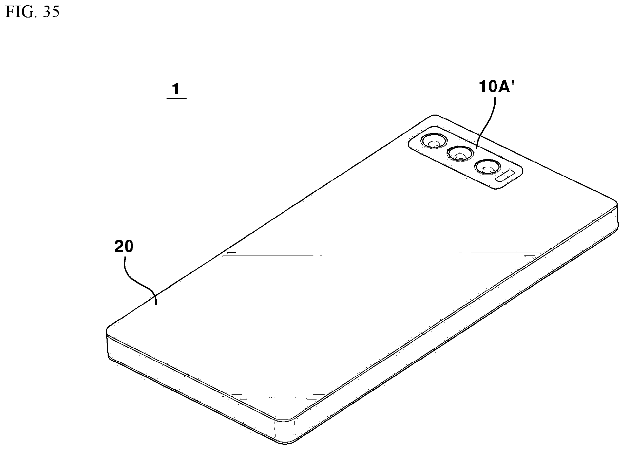

FIG. 33 is a perspective view of an optical instrument according to the present embodiment; FIG. 34 is a perspective view of an optical device according to the present embodiment seen from a direction different from that of FIG. 33; and FIG. 35 is a perspective view of an optical device according to a modified embodiment.

An optical instrument 1 may comprise any one or more among a hand phone, a portable phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation. The optical instrument **1** may comprise any device for photographing images or photos.

The optical instrument **1** may comprise a main body **20.** The optical instrument **1** may comprise a camera device **10A.** The camera device **1010** may be disposed in the main body **20.** The camera device **10A** may photograph a subject. The optical instrument **1** may comprise a display **1030.** The display **30** may be disposed in the main body **20.** The display **30** may output any one or more of a video and an image photographed by the camera device **10A.** The display **30** may be disposed on the first surface of the main body **20.** The camera device **10A** may be disposed on any one or more of a first surface of the main body **20** and a second surface opposite to the first surface.

The camera device **10A** may be disposed on a front surface of the main body **20** where the display **30** is disposed. The camera device **10A** may be disposed on a rear surface opposite to the front surface of the main body **20.** The camera device **10A** may comprise a plurality of camera devices being disposed on a rear surface of the main body **20** to be spaced apart in a long side direction of the main body **20.**

As a modified embodiment, the camera device **10A'** may comprise a plurality of camera devices being disposed on a rear surface of the main body **20** to be spaced apart in a short side direction of the main body **20.**

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a base;
a first holder disposed on the base;
a second holder disposed in the first holder;
a first coil and a first magnet configured to move the second holder in an optical axis direction;
a second coil and a second magnet configured to move the first holder in an x-direction or a y-direction perpendicular to an optical axis; and
a first ball disposed between an upper plate of the base and an upper plate of the first holder,
wherein the first ball is configured to guide the first holder to move in the x-direction and the y-direction perpendicular to the optical axis with respect to the base.

2. The lens driving device of claim 1, wherein the upper plate of the base comprises a first groove disposed with the first ball, and
wherein the first groove has a size greater than a maximum diameter of the first ball.

3. The lens driving device of claim 2, wherein when a center of the first ball and a center of the first groove are disposed to coincide with each other, a side surface of the first ball is spaced apart from an inner side surface of the first groove in the x-direction and the y-direction.

4. The lens driving device of claim 1, wherein the first ball has first to fourth unit balls, and
wherein the first unit ball is configured to guide the first holder to move in the x-direction and the y-direction perpendicular to the optical axis with respect to the base.

5. The lens driving device of claim 1, comprising:
a second ball disposed between the first holder and the second holder,
wherein the second ball is configured to guide the second holder to move in the optical axis direction with respect to the first holder.

6. The lens driving device of claim 5, wherein an inner side surface of the first holder comprises a second groove configured to guide the second ball, and
wherein an outer side surface of the second holder comprises a third groove disposed at a position corresponding to the second groove of the first holder.

7. The lens driving device of claim 6, wherein an inner corner area of the first holder comprises two surfaces meeting each other, and
wherein the second groove is formed on one of the two surfaces.

8. The lens driving device of claim 1, wherein an inner shape of the first holder corresponds to an outer shape of the second holder.

9. The lens driving device of claim 1, comprising a wire configured to support the first holder with respect to the base.

10. A lens driving device comprising:
a base;
a first holder disposed on the base;
a second holder disposed in the first holder;
a first magnet disposed on the second holder;
a second magnet disposed on the base;
a first coil and a second coil coupled with the first holder;
a first ball disposed between the base and the first holder; and
a second ball disposed between the first holder and the second holder,
wherein the first ball is disposed between an upper plate of the base and an upper plate of the first holder, and
wherein the second ball is disposed between an inner side surface of the first holder and an outer side surface of the second holder.
